(19)

**Europäisches Patentamt**
**European Patent Office**
**Office européen des brevets**

(11) **EP 4 410 883 A2**

(12) **EUROPEAN PATENT APPLICATION**

(43) Date of publication:
**07.08.2024   Bulletin 2024/32**

(21) Application number: **24183265.8**

(22) Date of filing: **14.04.2022**

(51) International Patent Classification (IPC):
***C08L 23/04*** *(2006.01)*

(52) Cooperative Patent Classification (CPC):
**C08L 23/04; B29C 55/005; B32B 27/08;**
**B32B 27/18; B32B 27/20; B32B 27/30;**
**B32B 27/32; C08J 5/18;** B32B 2250/03;
B32B 2250/24; B32B 2250/246; B32B 2307/30;
B32B 2307/406; B32B 2307/408; B32B 2307/514;

*(Cont.)*

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **19.04.2021   US 202163176629 P**

(62) Document number(s) of the earlier application(s) in
accordance with Art. 76 EPC:
**22719033.7 / 4 326 801**

(71) Applicant: **Nova Chemicals (International) S.A.**
**1700 Fribourg (CH)**

(72) Inventors:
 • **AUBEE, Norman**
   **Okotoks, T1S 1S8 (CA)**
 • **GILLON, Bronwyn**
   **Calgary, T3E 2S5 (CA)**

 • **CARELLO, Christian**
   **Calgary, T3K 4V7 (CA)**
 • **TAYLOR, Jared**
   **Calgary, T2Y 2Z5 (CA)**
 • **FEREYDOON, Maryam**
   **Calgary, T2N 1V5 (CA)**
 • **GOYAL, Shivendra**
   **Calgary, T3A 5X4 (CA)**
 • **LIGHTBODY, Owen**
   **Calgary, T3H 1T9 (CA)**

(74) Representative: **Mewburn Ellis LLP**
**Aurora Building**
**Counterslip**
**Bristol BS1 6BX (GB)**

Remarks:
This application was filed on 20-06-2024 as a
divisional application to the application mentioned
under INID code 62.

(54) **BIAXIALLY ORIENTED FILM**

(57)    A biaxially oriented polyethylene film structure
comprising: a core layer; a first adjacent layer, adjacent
to a first side of the core layer; and a second adjacent
layer, adjacent to a second side of the core layer; wherein
the core layer comprises: i) from 50 to 99.5 weight percent
of a first polyethylene which is an ethylene copolymer
having a density of greater than 0.940 g/cm$^3$; and ii) from
0.5 to 50 weight percent of a second polyethylene which
is a high density polyethylene having a density of at least
0.950 g/cm$^3$; wherein the high density polyethylene fur-
ther comprises a nucleating agent or a mixture of nucle-
ating agents. The biaxially oriented film has very good
optical properties.

FIGURE 1

EP 4 410 883 A2

**(Cont. next page)**

(52) Cooperative Patent Classification (CPC): (Cont.)
B32B 2307/518; B32B 2307/54; B32B 2307/558;
B32B 2307/72; B32B 2307/736; B32B 2439/70;
C08J 2323/04; C08J 2423/04

**Description**

TECHNICAL FIELD

The present disclosure is directed to BOPE film or film structure comprising at least three layers and having good optical properties.

BACKGROUND ART

Biaxially oriented polyethylene (BOPE) films are prepared by stretching a thick precursor (or base) film, typically known as a cast sheet, in two directions: the machine direction (MD) and the transverse direction (TD). The stretching may be conducted in a single procedure (simultaneous biaxial stretching) or in two sequential procedures (sequential biaxial stretching). The equipment generally used in the stretching process is commonly referred to as a "tenter frame" line.

In comparison to traditional blown film, a BOPE film can achieve up to twice the stiffness (tensile modulus), have improved tensile strength, impact strength, puncture resistance, and flex cracking resistance, as well as improved (i.e. lower) optical haze.

BOPE films may be suitable for a wide variety of packaging applications, and the improvement in properties observed for a film or film structure which has been subjected to biaxially orientation may allow the design of "all polyethylene" packages (as opposed to packages made with different types of polymers). Such "all polyethylene" packages would have higher inherent recyclability.

The tenter frame process is in wide use for the preparation of biaxially oriented polypropylene (BOPP) and biaxially oriented polyethylene terephthalate (BOPET) films. However, polyethylene may be comparatively difficult to stretch / biaxially orient and this has limited the commercial use of BOPE. Prior to the present work, it has been observed that high density polyethylenes specifically (e.g. having a density of greater than about 0.950 g/cm$^3$), behaved poorly when subjected to biaxially orientation. Indeed, specific or precise process conditions have been required (i.e. very narrow processing windows) to make a BOPE film from high density polyethylenes. Alternatively, high density polyethylene has been coextruded using adhesion promoter layers ("a casting promotor"), such as layers comprising lower density polyethylene materials and blends thereof, or ethylene/propylene copolymers and terpolymers as adjacent co-extruded layers.

There remains a need for new polyethylene compositions, especially higher density polyethylene compositions that provide improved "stretchability" in a BOPE process, such as for example a tenter-frame BOPE process.

SUMMARY OF INVENTION

Provided in an embodiment of the disclosure is an "all polyethylene" biaxially oriented film structure having good optical properties and which may have enhanced recyclability relative to BOPE films made from mixed polymeric materials.

An embodiment of the disclosure is a biaxially oriented polyethylene film structure comprising:

a core layer;
a first adjacent layer, adjacent to a first side of the core layer; and
a second adjacent layer, adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and
ii) from 0.5 to 50 weight percent of a second polyethylene, wherein the second polyethylene is a polyethylene homopolymer composition having a density of at least 0.950 g/cm3;

wherein the polyethylene homopolymer composition comprises a nucleating agent or a mixture of nucleating agents; and
wherein the first adjacent layer and the second adjacent layer each comprise at least 50 weight percent of a third polyethylene, wherein the third polyethylene has a density which is lower than the density of the first polyethylene.

An embodiment of the disclosure is a biaxially oriented polyethylene film structure comprising:

a core layer;

a first skin layer adjacent to a first side of the core layer; and
a second skin layer adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and
ii) from 0.5 to 50 weight percent of a second polyethylene, wherein the second polyethylene is a polyethylene homopolymer composition having a density of at least 0.950 g/cm3;

wherein the polyethylene homopolymer composition comprises a nucleating agent or a mixture of nucleating agents; and
wherein the first skin layer and the second skin layer each comprise at least 50 weight percent of a third polyethylene, wherein the third polyethylene has a density which is lower than the density of the first polyethylene.

An embodiment of the disclosure is a biaxially oriented polyethylene film structure comprising:

a core layer;
a first adjacent layer, adjacent to a first side of the core layer; and
a second adjacent layer, adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and
ii) from 0.5 to 50 weight percent of a second polyethylene, wherein the second polyethylene is a high density polyethylene having a density of at least 0.950 g/cm$^3$;

wherein the high density polyethylene comprises a nucleating agent or a mixture of nucleating agents;
wherein the first adjacent layer and the second adjacent layer each comprise at least 50 weight percent of a third polyethylene, wherein the third polyethylene has a density which is lower than the density of the first polyethylene; and
wherein the biaxially oriented polyethylene film has a haze value of less than 15 percent.

An embodiment of the disclosure is a biaxially oriented polyethylene film structure comprising:

a core layer;
a first skin layer adjacent to a first side of the core layer; and
a second skin layer adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and
ii) from 0.5 to 50 weight percent of a second polyethylene, wherein the second polyethylene is a high density polyethylene having a density of at least 0.950 g/cm$^3$;

wherein the high density polyethylene comprises a nucleating agent or a mixture of nucleating agents;
wherein the first skin layer and the second skin layer each comprise at least 50 weight percent of a third polyethylene, wherein the third polyethylene has a density which is lower than the density of the first polyethylene; and
wherein the biaxially oriented polyethylene film structure has a haze value of less than 15 percent.

In an embodiment of the disclosure, a third polyethylene is selected from the group consisting of: a linear low density polyethylene (LLDPE), and a medium density polyethylene (MDPE).

BRIEF DESCRIPTION OF THE DRAWING

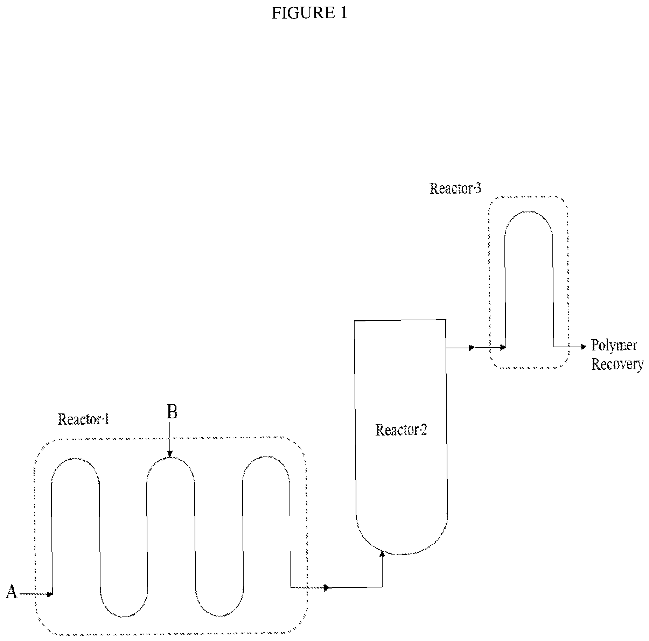

Figure 1 shows a schematic drawing of a multi-zone reactor system which includes a first polymerization zone defined by a first tubular reactor, a second polymerization zone defined by a tank reactor, and a third polymerization zone defined by a second tubular reactor. The schematic is only representative of the multi-zone reactor system and is not drawn to scale. The approximate locations of hydrogen addition to the multi-zone reactor system are also shown (locations A and B).

DESCRIPTION OF EMBODIMENTS

As used herein, the term "monomer" refers to a small molecule that may chemically react and become chemically bonded with itself or other monomers to form a polymer.

As used herein, the term "α-olefin" or "alpha-olefin" is used to describe a monomer having a linear hydrocarbon chain containing from 3 to 20 carbon atoms having a double bond at one end of the chain; an equivalent term is "linear α-olefin". An alpha-olefin may also be referred to as a comonomer.

As used herein, the terms "polyethylene", "polyethylene composition" or "ethylene polymer", refers to macromolecules produced from ethylene monomers and optionally one or more additional monomers; regardless of the specific catalyst or specific process used to make the ethylene polymer. In the polyethylene art, the one or more additional monomers are often called "comonomer(s)" and typically include α-olefins. The term "homopolymer" generally refers to a polymer that contains only one type of monomer. The term "copolymer" refers to a polymer that contains two or more types of monomer. Common polyethylene types include high density polyethylene (HDPE); medium density polyethylene (MDPE); linear low density polyethylene (LLDPE); and very low density polyethylene (VLPDE) or ultralow density polyethylene (ULPDE) which are also known as plastomers and elastomers. The term polyethylene also includes polyethylene terpolymers which may include two or more comonomers in addition to ethylene. The term polyethylene also includes combination of, or blends of, the polyethylene types described above.

The term "heterogeneously branched polyethylene" refers to a subset of polymers in the ethylene polymer group that are produced using a heterogeneous catalyst system; non-limiting examples of which include Ziegler-Natta or chromium catalysts, both of which are well known in the art.

The term "homogeneously branched polyethylene" refers to a subset of polymers in the ethylene polymer group that are produced using single-site catalysts; non-limiting examples of which include metallocene catalysts, phosphinimine catalysts, and constrained geometry catalysts all of which are well known in the art.

Typically, homogeneously branched polyethylenes have narrow molecular weight distributions, for example gel permeation chromatography (GPC) $M_w/M_n$ values of less than about 2.8, especially less than about 2.3, although exceptions may arise; $M_w$ and $M_n$ refer to weight and number average molecular weights, respectively. In contrast, the $M_w/M_n$ of heterogeneously branched ethylene polymers are typically greater than the $M_w/M_n$ of homogeneous polyethylene. In general, homogeneously branched ethylene polymers also have a narrow composition distribution, i.e. each macromolecule within the molecular weight distribution has a similar comonomer content. Frequently, the composition distribution breadth index "CDBI" is used to quantify how the comonomer is distributed within an ethylene polymer, as well as to differentiate ethylene polymers produced with different catalysts or processes. The "$CDBI_{50}$" is defined as the percent of ethylene polymer whose composition is within 50 weight percent (wt%) of the median comonomer composition; this definition is consistent with that described in WO 93/03093 assigned to Exxon Chemical Patents Inc. The $CDBI_{50}$ of an ethylene copolymer can be calculated from TREF curves (Temperature Rising Elution Fractionation); the TREF method is described in Wild, et al., J. Polym. Sci., Part B, Polym. Phys., Vol. 20 (3), pages 441-455. Typically the $CDBI_{50}$ of homogeneously branched ethylene polymers are greater than about 70% or greater than about 75%. In contrast, the $CDBI_{50}$ of α-olefin containing heterogeneously branched ethylene polymers are generally lower than the $CDBI_{50}$ of homogeneous ethylene polymers. For example, the $CDBI_{50}$ of a heterogeneously branched ethylene polymer may be less than about 75%, or less than about 70%.

It is well known to those skilled in the art, that homogeneously branched ethylene polymers are frequently further subdivided into "linear homogeneous ethylene polymers" and "substantially linear homogeneous ethylene polymers". These two subgroups differ in the amount of long chain branching: more specifically, linear homogeneous ethylene polymers have less than about 0.01 long chain branches per 1000 carbon atoms; while substantially linear ethylene polymers have greater than about 0.01 to about 3.0 long chain branches per 1000 carbon atoms. A long chain branch is macromolecular in nature, i.e. similar in length to the macromolecule that the long chain branch is attached to. Hereafter, in this disclosure, the term "homogeneously branched polyethylene" or "homogeneously branched ethylene polymer" refers to both linear homogeneous ethylene polymers and substantially linear homogeneous ethylene polymers.

In the present disclosure, the terms "ethylene homopolymer" or "polyethylene homopolymer", is used to refer to a polymer which is the product of a polymerization process, in which only ethylene was deliberately added or deliberately present as a polymerizable monomer.

In the present disclosure, the terms "ethylene copolymer" or "polyethylene copolymer", it is meant that the polymer being referred to is the product of a polymerization process, in which ethylene and one or more than one α-olefin were deliberately added or were deliberately present as a polymerizable monomer.

As used herein the term "unsubstituted" means that hydrogen radicals are bonded to the molecular group that follows the term unsubstituted. The term "substituted" means that the group following this term possesses one or more moieties (non-hydrogen radicals) that have replaced one or more hydrogen radicals in any position within the group.

The term "film" is used herein to mean a film having one or more layers which is formed by the extrusion of a polymer through one or more die openings. The term "film structure" is used to connote that a film has more than one layer (i.e. a film structure may have at least two layers, at least three layers, at least four layers, at least five layers, etc.).

In the present disclosure the terms "biaxially oriented polyethylene film", "BOPE film", "biaxially oriented polyethylene films structure", or "BOPE film structure" generally describes a biaxially oriented film or film structure in which polyethylene is the main constituent polymer (i.e. polyethylene is present in higher weight percent than other, non-polyethylene polymers, based on the total weight of polymer present in the film or film structure).

The phrase "all polyethylene" as used herein, when used to describe a film or a film structure, means that the film or film structure will comprise at least 90 percent by weight of a polyethylene (as opposed to non-polyethylene based polymeric materials or compositions), based on the total weight of polymer present in the film or film structure.

A "skin" layer is an exterior layer of a multilayer film structure (i.e. a layer having an external surface exposed to the environment).

A "core" layer is an interior layer of a multilayer film structure (i.e. a layer adjacent to an inner surface of a skin layer, or adjacent to another interior layer or adjacent to another core layer). A multilayer film structure may have one or more core layers which may also be deemed adjacent interior layers.

BOPE Film Structure

In an embodiment of the present invention, a biaxially oriented polyethylene film structure has at least three layers, including at least one core layer comprising: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a high density polyethylene having a density of at least 0.950 g/cm$^3$ wherein the high density polyethylene comprises a nucleating agent or a mixture of nucleating agents.

In an embodiment of the present invention, a biaxially oriented polyethylene film structure has at least three layers, including at least one core layer comprising: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a polyethylene homopolymer composition having a density of at least 0.950 g/cm$^3$; wherein the polyethylene homopolymer composition comprises a nucleating agent or a mixture of nucleating agents.

An embodiment of the disclosure is a biaxially oriented polyethylene film structure comprising: a core layer; a first adjacent layer, adjacent to a first side of the core layer; and a second adjacent layer, adjacent to a second side of the core layer; wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a high density polyethylene having a density of at least 0.950 g/cm$^3$; wherein the high density polyethylene comprises a nucleating agent or a mixture of nucleating agents; and wherein the first adjacent layer and the second adjacent layer each comprise a third polyethylene, wherein the third polyethylene has a density which is lower than the density of the first polyethylene.

In embodiment of the disclosure a biaxially oriented polyethylene film structure comprises: a core layer; a first adjacent layer, adjacent to a first side of the core layer; and a second adjacent layer, adjacent to a second side of the core layer;
wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a high density polyethylene having a density of at least 0.950 g/cm$^3$; wherein the high density polyethylene comprises a nucleating agent or a mixture of nucleating agents; and wherein the first adjacent layer and the second adjacent layer each comprise at least 50 weight percent (based on the weight of the polymeric material used to make each of the first adjacent layer and the second adjacent layer) of a third polyethylene, wherein the third polyethylene has a density which is lower than the density of the first polyethylene.

An embodiment of the disclosure is a biaxially oriented polyethylene film structure comprising: a core layer; a first skin layer, adjacent to a first side of the core layer; and a second skin layer, adjacent to a second side of the core layer; wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a high density polyethylene having a density of at least 0.950 g/cm$^3$; wherein the high density polyethylene comprises a nucleating agent or a mixture of nucleating agents; and wherein the first skin layer and the second skin layer each comprise a third polyethylene, wherein the third polyethylene has a density which is lower than the density of the first polyethylene.

An embodiment of the disclosure is a biaxially oriented polyethylene film structure comprising: a core layer; a first skin layer, adjacent to a first side of the core layer; and a second skin layer, adjacent to a second side of the core layer; wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a high density polyethylene having a density of at least 0.950 g/cm$^3$; wherein the high density polyethylene comprises a nucleating agent or a mixture of nucleating agents; and wherein the first skin layer and the second skin layer each comprise at least 50 weight percent of a third polyethylene, wherein the third polyethylene has a density which is lower than the density of the first polyethylene.

In an embodiment of the disclosure, the core layer comprises: i) from 70 to 99.5 weight percent of a first polyethylene, wherein the first polyethylene is an ethylene copolymer having a density of greater than 0.940 g/cm$^3$; and ii) from 0.5 to 30 weight percent a second polyethylene, wherein the second polyethylene is a high density polyethylene having a density of at least 0.950 g/cm$^3$; wherein the high density polyethylene comprises a nucleating agent or a mixture of nucleating agents.

In an embodiment of the disclosure, the core layer comprises: i) from 90 to 99.5 weight percent of a first polyethylene, wherein the first polyethylene is an ethylene copolymer having a density of greater than 0.940 g/cm$^3$; and ii) from 0.5 to 10 weight percent a second polyethylene, wherein the second polyethylene is a high density polyethylene having a density of at least 0.950 g/cm$^3$; wherein the high density polyethylene comprises a nucleating agent or a mixture of nucleating agents.

In an embodiment of the disclosure, the nucleating agent or a mixture of nucleating agents present in the high density polyethylene is present in an amount which provides from 1 to 1000 ppm (parts per million) of the nucleating agent or a mixture of nucleating agents based on the total weight of polymeric material used in the core layer (i.e. based on the total weight of i) the first polyethylene; and ii) the high density polyethylene used in the core layer).

In further embodiments of the disclosure, the nucleating agent or a mixture of nucleating agents present in the high density polyethylene is present in an amount which provides from 5 to 1,000 ppm (parts per million), or from 5 to 750 ppm, or from 5 to 500 ppm, or from 5 to 400 ppm, or from 5 to 350 ppm, or from 5 to 250 ppm, or from 5 to 150 ppm, or from 5 to 100 ppm of the nucleating agent or a mixture of nucleating agents based on the total weight of polymeric material used in the core layer (i.e.. based on the total weight of i) the first polyethylene; and ii) the high density polyethylene used in the core layer).

In further embodiments of the disclosure, the nucleating agent or a mixture of nucleating agents present in the high density polyethylene is present in an amount which provides fewer than 500 ppm (parts per million), or fewer than 350 ppm, or fewer than 250 ppm, or fewer than 150 ppm, or fewer than 100 ppm, or fewer than 75 ppm, or fewer than 50 ppm, or fewer than 40 ppm, or fewer than 30 ppm, or fewer than 25 ppm, or fewer than 20 ppm, or fewer than 15 ppm, or fewer than 10 ppm of the nucleating agent or a mixture of nucleating agents based on the total weight of polymeric material used in the core layer (i.e. based on the total weight of i) the first polyethylene; and ii) the high density polyethylene used in the core layer).

An embodiment of the disclosure is a biaxially oriented polyethylene film structure comprising: a core layer; a first adjacent layer, adjacent to a first side of the core layer; and a second adjacent layer, adjacent to a second side of the core layer;

wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a polyethylene homopolymer composition having a density of at least 0.950 g/cm$^3$; wherein the polyethylene homopolymer composition comprises a nucleating agent or a mixture of nucleating agents; and wherein the first adjacent layer and the second adjacent layer each comprise a third polyethylene, wherein the third polyethylene has a density which is lower than the density of the first polyethylene.

An embodiment of the disclosure is a biaxially oriented polyethylene film structure comprising: a core layer; a first adjacent layer, adjacent to a first side of the core layer; and a second adjacent layer, adjacent to a second side of the core layer;

wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a polyethylene homopolymer composition having a density of at least 0.950 g/cm$^3$; wherein the polyethylene homopolymer composition comprises a nucleating agent or a mixture of nucleating agents; and wherein the first adjacent layer and the second adjacent layer each comprise at least 50 weight percent (based on the weight of the polymeric material used to make each of the first adjacent layer and the second adjacent layer) of a third polyethylene, wherein the third polyethylene has a density which is lower than the density of the first polyethylene.

An embodiment of the disclosure is a biaxially oriented polyethylene film structure comprising: a core layer; a first skin layer, adjacent to a first side of the core layer; and a second skin layer, adjacent to a second side of the core layer; wherein the core layer comprises: i) from 50 to 99.5 weight percent of a first polyethylene, wherein the first polyethylene is an ethylene copolymer having a density of greater than 0.940 g/cm$^3$; and ii) from 0.5 to 50 weight percent of a second polyethylene, wherein the second polyethylene is a polyethylene homopolymer composition having a density of at least 0.950 g/cm³; wherein the polyethylene homopolymer composition comprises a nucleating agent or a mixture of nucleating agents; and wherein the first skin layer and the second skin layer each comprise a third polyethylene, wherein the third polyethylene has a density which is lower than the density of the first polyethylene.

An embodiment of the disclosure is a biaxially oriented polyethylene film structure comprising: a core layer; a first skin layer, adjacent to a first side of the core layer; and a second skin layer, adjacent to a second side of the core layer; wherein the core layer comprises: i) from 50 to 99.5 weight percent of a first polyethylene, wherein the first polyethylene is an ethylene copolymer having a density of greater than 0.940 g/cm³; and ii) from 0.5 to 50 weight percent of a second polyethylene, wherein the second polyethylene is a polyethylene homopolymer composition having a density of at least 0.950 g/cm³; wherein the polyethylene homopolymer composition comprises a nucleating agent or a mixture of nucleating agents; and wherein the first skin layer and the second skin layer each comprise at least 50 weight percent (based on the weight of the polymeric material used to make each of the first skin layer and the second skin layer) of a third polyethylene, wherein the third polyethylene has a density which is lower than the density of the first polyethylene.

In an embodiment of the disclosure, the core layer comprises: i) from 70 to 99.5 weight percent of a first polyethylene, wherein the first polyethylene is an ethylene copolymer having a density of greater than 0.940 g/cm³; and ii) from 0.5 to 30 weight percent a second polyethylene, wherein the second polyethylene is a polyethylene homopolymer composition having a density of at least 0.950 g/cm³; wherein the polyethylene homopolymer composition comprises a nucleating agent or a mixture of nucleating agents.

In an embodiment of the disclosure, the core layer comprises: i) from 90 to 99.5 weight percent of a first polyethylene, wherein the first polyethylene is an ethylene copolymer having a density of greater than 0.940 g/cm³; and ii) from 0.5 to 10 weight percent a second polyethylene, wherein the second polyethylene is a polyethylene homopolymer composition having a density of at least 0.950 g/cm³; wherein the polyethylene homopolymer composition comprises a nucleating agent or a mixture of nucleating agents.

In an embodiment of the disclosure, the nucleating agent or a mixture of nucleating agents present in the polyethylene homopolymer composition is present in an amount which provides from 1 to 1000 ppm (parts per million) of the nucleating agent or a mixture of nucleating agents based on the total weight of polymeric material used in the core layer (i.e. based on the total weight of i) the first polyethylene; and ii) the polyethylene homopolymer composition used in the core layer).

In further embodiments of the disclosure, the nucleating agent or a mixture of nucleating agents present in the polyethylene homopolymer composition is present in an amount which provides from 5 to 1,000 ppm (parts per million), or from 5 to 750 ppm, or from 5 to 500 ppm, or from 5 to 400 ppm, or from 5 to 350 ppm, or from 5 to 250 ppm, or from 5 to 150 ppm, or from 5 to 100 ppm of the nucleating agent or a mixture of nucleating agents based on the total weight of polymeric material used in the core layer (i.e. based on the total weight of i) the first polyethylene; and ii) the polyethylene homopolymer composition used in the core film layer).

In further embodiments of the disclosure, the nucleating agent or a mixture of nucleating agents present in the polyethylene homopolymer composition is present in an amount which provides fewer than 500 ppm (parts per million), or fewer than 350 ppm, or fewer than 250 ppm, or fewer than 150 ppm, or fewer than 100 ppm, or fewer than 75 ppm, or fewer than 50 ppm, or fewer than 40 ppm, or fewer than 30 ppm, or fewer than 25 ppm, or fewer than 20 ppm, or fewer than 15 ppm, or fewer than 10 ppm of the nucleating agent or a mixture of nucleating agents based on the total weight of polymeric material used in the core layer (i.e. based on the total weight of i) the first polyethylene; and ii) the polyethylene homopolymer composition used in the core film layer).

In an embodiment of the disclosure the first adjacent layer and the second adjacent layer each comprise at least 70 weight percent (based on the weight of the polymeric material used to make each of the first adjacent layer and the second adjacent layer) of a third polyethylene, wherein the third polyethylene has a density which is lower than the density of the first polyethylene.

In an embodiment of the disclosure the first adjacent layer and the second adjacent layer each comprise at least 90 weight percent (based on the weight of polymeric material used to make each of the first adjacent layer and the second adjacent layer) of a third polyethylene, wherein the third polyethylene has a density which is lower than the density of the first polyethylene.

In embodiments of the disclosure the first adjacent layer and the second adjacent layer each comprise at least 95 weight percent or at least 99 weight percent (based on the weight of polymeric material used to make each of the first adjacent layer and the second adjacent layer) of a third polyethylene, wherein the third polyethylene has a density which is lower than the density of the first polyethylene.

In an embodiment of the disclosure the first adjacent layer and the second adjacent layer each comprise 100 weight percent (based on the weight of polymeric material used to make each of the first adjacent layer and the second adjacent layer) of a third polyethylene, wherein the third polyethylene has a density which is lower than the density of the first polyethylene.

In embodiments of the disclosure, in addition to the third polyethylene, the first adjacent layer and the second adjacent layer may each comprise 50 weight percent or less, or 30 weight percent or less, or 10 weight percent or less, or 5 weight percent or less, or 1 weight percent or less (based on the weight of polymeric material used to make each of the first adjacent layer and the second adjacent layer) of:

a) a first polyethylene, wherein the first polyethylene is a copolymer having a density of greater than 0.940 g/cm$^3$, or
b) a second polyethylene, wherein the second polyethylene is a high density polyethylene having a density of at least 0.950 g/cm$^3$; or
c) another polyethylene which is different from the first, the second and the third polyethylenes, and which may be selected from the group consisting of: linear low density polyethylene (LLDPE), medium density polyethylene (MDPE), high density polyethylene (HDPE), very low density polyethylene (VLDPE) and High Pressure Low Density Polyethylene (HPLDPE) which is prepared by the free radical polymerization of ethylene.

In an embodiment of the disclosure the first skin layer and the second skin layer each comprise at least 70 weight percent (based on the weight of polymeric material used to make each of the first skin layer and the second skin layer) of a third polyethylene, wherein the third polyethylene has a density which is lower than the density of the first polyethylene.

In an embodiment of the disclosure the first skin layer and the second skin layer each comprise at least 90 weight percent (based on the weight of polymeric material used to make each of the first skin layer and the second skin layer) of a third polyethylene, wherein the third polyethylene has a density which is lower than the density of the first polyethylene.

In embodiments of the disclosure the first skin layer and the second skin layer each comprise at least 95 weight percent or at least 99 weight percent (based on the weight of polymeric material used to make each of the first skin layer and the second skin layer) of a third polyethylene, wherein the third polyethylene has a density which is lower than the density of the first polyethylene.

In an embodiment of the disclosure the first skin layer and the second skin layer each comprise 100 weight percent (based on the weight of polymeric material used to make each of the first skin layer and the second skin layer) of a third polyethylene, wherein the third polyethylene has a density which is lower than the density of the first polyethylene.

In embodiments of the disclosure, in addition to the third polyethylene, the first skin layer and the second skin layer may each comprise 50 weight percent or less, or 30 weight percent or less, or 10 weight percent or less, or 5 weight percent or less, or 1 weight percent or less (based on the weight of polymeric material used to make each of the first skin layer and the second skin layer) of:

a) a first polyethylene, wherein the first polyethylene is a copolymer having a density of greater than 0.940 g/cm$^3$, or
b) a second polyethylene, wherein the second polyethylene is a high density polyethylene having a density of at least 0.950 g/cm$^3$; or
c) another polyethylene which is different from the first, the second and the third polyethylenes, and which may be selected from the group consisting of: linear low density polyethylene (LLDPE), medium density polyethylene (MDPE), high density polyethylene (HDPE), very low density polyethylene (VLDPE) and High Pressure Low Density Polyethylene (HPLDPE) which is prepared by the free radical polymerization of ethylene.

In an embodiment, a biaxially oriented film or film structure comprises: a core layer; a first adjacent layer adjacent to a first side of the core layer; and a second adjacent layer adjacent to a second side of the core layer; and the core layer comprises at least 50 weight percent of the total weight of the biaxially oriented film or film structure.

In an embodiment, a biaxially oriented film or film structure comprises: a core layer; a first adjacent layer adjacent to a first side of the core layer; and a second adjacent layer adjacent to a second side of the core layer; and the core layer comprises at least 60 weight percent of the total weight of the biaxially oriented film or film structure.

In an embodiment, a biaxially oriented film or film structure comprises: a core layer; a first adjacent layer adjacent to a first side of the core layer; and a second adjacent layer adjacent to a second side of the core layer; and the core layer comprises at least 70 weight percent of the total weight of the biaxially oriented film or film structure.

In an embodiment, a biaxially oriented film or film structure comprises: a core layer; a first adjacent layer adjacent to a first side of the core layer; and a second adjacent layer adjacent to a second side of the core layer; and the core layer comprises at least 80 weight percent of the total weight of the biaxially oriented film or film structure.

In an embodiment, a biaxially oriented film or film structure comprises: a core layer; a first adjacent layer adjacent to a first side of the core layer; and a second adjacent layer adjacent to a second side of the core layer; and the core layer comprises at least 90 weight percent of the total weight of the biaxially oriented film or film structure.

In an embodiment, a biaxially oriented film or film structure comprises: a core layer; a first skin layer adjacent to a first side of the core layer; and a second skin layer adjacent to a second side of the core layer; and the core layer comprises at least 50 weight percent of the total weight of the biaxially oriented film or film structure.

In an embodiment, a biaxially oriented film or film structure comprises: a core layer; a first skin layer adjacent to a first side of the core layer; and a second skin layer adjacent to a second side of the core layer; and the core layer comprises at least 60 weight percent of the total weight of the biaxially oriented film or film structure.

In an embodiment, a biaxially oriented film or film structure comprises: a core layer; a first skin layer adjacent to a first side of the core layer; and a second skin layer adjacent to a second side of the core layer; and the core layer comprises at least 70 weight percent of the total weight of the biaxially oriented film or film structure.

In an embodiment, a biaxially oriented film or film structure comprises: a core layer; a first skin layer adjacent to a first side of the core layer; and a second skin layer adjacent to a second side of the core layer; and the core layer comprises at least 80 weight percent of the total weight of the biaxially oriented film or film structure.

In an embodiment, a biaxially oriented film or film structure comprises: a core layer; a first skin layer adjacent to a first side of the core layer; and a second skin layer adjacent to a second side of the core layer; and the core layer comprises at least 90 weight percent of the total weight of the biaxially oriented film or film structure.

A biaxially oriented polyethylene (BOPE) film or film structure may in an embodiment of the disclosure be made using a tenter frame process.

The tenter frame process is commonly used to prepare biaxially oriented film and is suitable for use in embodiments of the present disclosure. The tenter frame process is well known to persons skilled in the art of film making. The process begins with an extruder that is equipped with a slot die to form a sheet or film. For convenience, this extruded sheet or film may be referred to as the "base film" or "base film structure" or "base structure". Once the base structure has been quenched on chill rolls, it is re-heated and machine direction (MD) stretching or machine direction orientation (MDO) is accomplished by pulling the base structure using several closely spaced rolls that rotate with progressively increasing surface speeds. Following MD stretching, clips (that are attached to chains) grip the edges of the moving sheet (or film, or web) and carry it into an oven. In the oven, the edges of the base structure are drawn apart making the sheet wider, thus providing transverse direction orientation (TDO). The orientation/stretching causes the film structure to become thinner, proportionally to the orientation or stretch ratios. For example, to prepare a 1-mil finished BOPE film with a 5:1 stretch ratio in the machine direction (MD) and a 8:1 stretch ratio in the transverse direction (TD), the process may start out with a 40-mil thick film or sheet.

In embodiments of the disclosure, the stretch ratio in the machine direction (MD) may range from about 5:1 to about 9:1 while the stretch ratio in the transverse direction (TD) may range from about 7:1 to 12:1. In other embodiments of the disclosure, the stretch ratio in the machine direction (MD) may range from about 3:1 to about 12:1 while the stretch ratio in the transverse direction (TD) may range from about 3:1 to 12:1. In still other embodiments of the disclosure, the stretch ratio in the machine direction (MD) may range from about 5:1 to about 12:1 while the stretch ratio in the transverse direction (TD) may range from about 5:1 to 12:1. In yet still other embodiments of the disclosure, the stretch ratio in the machine direction (MD) may range from about 3:1 to about 10:1 while the stretch ratio in the transverse direction (TD) may range from about 3:1 to 10:1.

Further details of a biaxial orientation processes are provided by Kanai T., et al. in the textbook "Film Processing Advances" (2014); Hanser Publishers, but generally a sequential biaxial orientation process will include: cast extruding a relatively thick base film structure from a slot die followed by cooling on a chill roll (or with a water bath); stretching the base film structure in the machine direction using heated rollers which rotate at gradually increasing speeds; stretching the film structure in the transverse direction by pulling each edge of the film structure with clips attached to the edge of the film structure, and where as the clips pull the film forward they move farther apart to pull the edges of the gripped film in the cross direction (i.e. stretching occurs in the transverse direction which is perpendicular to the machine direction); passage through an oven to anneal the film structure; optional surface treatment of the film structure; trimming away of the unstretched edges of the film structure which are held by the clips; and finally winding of the film structure.

Although sequential biaxially stretching is employed in embodiments of the present disclosure, sequential biaxially orientation may in some embodiments lead to film quality issues. For example, the optics of a film or multilayer film structure may be compromised in some embodiments. Hence, for certain embodiments, an alternative unit operation may be preferable, which involves simultaneous machine direction/transverse direction stretching in a single process step. In an embodiment, during simultaneous stretching, a base film may be held by tenter clips (as described above) and suspended in the air while being stretched in both the MD and TD directions.

In embodiments of the disclosure, a biaxially oriented film or film structure comprising at least three layers has a haze value of ≤ 20%, or < 20%, or ≤ 15%, or < 15%, or ≤ 10%, or < 10%, or ≤ 7.5%, or < 7.5%.

In embodiments of the disclosure, a biaxially oriented film or film structure comprising at least three layers has a clarity value of ≥ 80%, or > 80%, or ≥ 85%, or > 85%, or ≥ 90%, or > 90%, or ≥ 95%, or > 95%.

In embodiments of the disclosure, a biaxially oriented film or film structure comprising a core layer; a first adjacent layer adjacent to a first side of the core layer; and a second adjacent layer adjacent to a second side of the core layer has a haze value of ≤ 20%, or < 20%, or ≤ 15%, or < 15%, or ≤ 10%, or < 10%, or ≤ 7.5%, or < 7.5%.

In embodiments of the disclosure, a biaxially oriented film or film structure comprising a core layer; a first adjacent layer adjacent to a first side of the core layer; and a second adjacent layer adjacent to a second side of the core layer has a clarity value of $\geq$ 80%, or > 80%, or $\geq$ 85%, or > 85%, or $\geq$ 90%, or > 90%, or $\geq$ 95%, or > 95%.

In embodiments of the disclosure, a biaxially oriented film or film structure comprising a core layer; a first skin layer adjacent to a first side of the core layer; and a second skin layer adjacent to a second side of the core layer has a haze value of $\leq$ 20%, or < 20%, or $\leq$ 15%, or < 15%, or $\leq$ 10%, or < 10%, or $\leq$ 7.5%, or < 7.5%.

In embodiments of the disclosure, a biaxially oriented film or film structure comprising a core layer; a first skin layer adjacent to a first side of the core layer; and a second skin layer adjacent to a second side of the core layer has a clarity value of $\geq$ 80%, or > 80%, or $\geq$ 85%, or > 85%, or $\geq$ 90%, or > 90%, or $\geq$ 95%, or > 95%.

The biaxially oriented films prepared according to this disclosure may be suitable for use in a wide variety of packaging applications. In an embodiment, the biaxially oriented film structure may be used in a laminated structure. For example, the biaxially oriented film structure of the present disclosure may be used as the print web when laminated to a sealant web which is also made from a polyethylene, but which may comprise lower density polyethylene materials. This type of laminated structure may be more easily recycled in comparison to conventional laminated structures that contain a layer of polyester or polypropylene that is laminated to a layer of polyethylene.

Further embodiments of the first polyethylene used in the biaxially oriented film structure are provided below.

Further embodiments of the second polyethylene used in the biaxially oriented film structure are provided below.

Further embodiments of the third polyethylene used in the biaxially oriented film structure are provided below.

The First Polyethylene

In an embodiment of the disclosure, the first polyethylene is made with a multi-site catalyst system, non-limiting examples of which include Ziegler-Natta polymerization catalysts and chromium catalysts, both of which are well known in the art.

In an embodiment of the disclosure, the first polyethylene is made with a Ziegler-Natta polymerization catalyst which is well known in the art.

In an embodiment of the disclosure, the first polyethylene is made with a Ziegler-Natta polymerization catalyst in a solution phase polymerization process.

In an embodiment of the disclosure, the first polyethylene is made with a Ziegler-Natta polymerization catalyst in a solution phase polymerization process which takes place in a multi-zone polymerization reactor system.

In an embodiment of the disclosure, the first polyethylene is made with a Ziegler-Natta polymerization catalyst in a solution phase polymerization process which takes place in a multi-zone polymerization reactor system and the multi-zone reactor system comprises a first, a second and a third polymerization zone.

In an embodiment of the disclosure, the first polyethylene is an ethylene copolymer.

In embodiments of the disclosure, alpha-olefins which may be copolymerized with ethylene to make the first polyethylene may be selected from the group comprising 1-butene, 1-pentene, 1-hexene and 1-octene and mixtures thereof.

In an embodiment of the disclosure, the first polyethylene comprises ethylene and at least one alpha olefin having from 4 to 8 carbon atoms.

In an embodiment of the disclosure, the first polyethylene is an ethylene/1-butene copolymer.

In embodiments of the disclosure, the first polyethylene has a density of at least 0.940 $g/cm^3$, or greater than 0.940 $g/cm^3$, or at least 0.941 $g/cm^3$.

In embodiments of the disclosure, the first polyethylene has a density of from 0.940 to 0.965 $g/cm^3$, or from 0.940 to 0.963 $g/cm^3$, or from 0.941 to 0.965 $g/cm^3$, or from 0.941 to 0.963 $g/cm^3$, or from 0.941 to 0.962 g/lOmin, or from 0.940 to 0.960 $g/cm^3$, or from 0.940 to 0.958 $g/cm^3$, or from 0.940 to 0.956 $g/cm^3$, or from 0.940 to 0.952 $g/cm^3$, or from 0.940 to 0.950 $g/cm^3$, or from 0.942 to 0.960 $g/cm^3$, or from 0.942 to 0.958 $g/cm^3$, or from 0.942 to 0.956 $g/cm^3$, or from 0.942 to 0.952 $g/cm^3$, or from 0.942 to 0.950 $g/cm^3$.

In embodiments of the disclosure the melt index, $I_2$ of the first polyethylene will be at least 0.50 g/lOmin, or at least 0.75 g/lOmin, or at least 0.80 g/lOmin, or at least 1.0 g/lOmin.

In embodiments of the disclosure the melt index, $I_2$ of the first polyethylene may be from about 0.01 g/lOmin to about 10.0 g/lOmin, or from about 0.1 g/lOmin to about 10.0 g/lOmin, or from 0.5 to 10.0 g/lOmin, or from about 0.1 g/lOmin to about 5.0 g/lOmin, or from about 0.1 g/lOmin to about 3.0 g/lOmin, or from about 0.5 g/lOmin to about 5.0 g/10min, or from about 0.5 g/10min to about 3.0 g/min, or from about 0.5 g/10min to about 2.5 g/10min.

In embodiments of the disclosure the melt flow ratio (MFR), $I_{21}/I_2$ of the first polyethylene is greater than 50, or greater than 60, or greater than 65 or greater than 70, or greater than 75.

In an embodiment of the disclosure the melt flow ratio (MFR), $I_{21}/I_2$ of the first polyethylene is less than 115.

In embodiments of the disclosure the melt flow ratio (MFR), $I_{21}/I_2$ of the first polyethylene is from 50 to 120, or from 50 to 115, or from greater than 65 to less than 115, or from greater than 75 to less than 115.

In an embodiment of the disclosure, the first polyethylene has a number average molecular weight, $M_n$ of from about 5,000 to about 75,000, or from about 5,000 to about 50,000, or from about 5,000 to about 30,000, or from about 5,000 to about 25,000, or from about 7,500 to about 50,000, or from about 7,500 to about 30,000, or from about 7,500 to about 25,000, or from about 5,000 to about 20,000, or from about 5,000 to about 15,000, or from about 7,500 to about 20,000, or from about 7,500 to about 15,000, or from about 10,000 to about 15,000, or from about 10,000 to about 12,500, or from about 11,000 to about 15,000, or from about 11,000 to about 12,500, or from greater than 11,000 to less than 12,500, or from greater than 11,000 to less than 15,000.

In an embodiment of the disclosure, the first polyethylene has a weight average molecular weight, $M_w$ of from about 75,000 to about 250,000, or from about 80,000 to about 200,000, or from about 90,000 to about 175,000, or from about 100,000 to about 175,000, or from about 90,000 to about 150,000, or from about 100,000 to about 150,000, or from about 100,000 to about 125,000, or from about 90,000 to about 130,000, or from about 90,000 to about 125,000, or from about 85,000 to about 140,000, or from about 85,000 to about 150,000, or from greater than about 85,000 to less than about 140,000.

In an embodiment of the disclosure, the first polyethylene has a Z-average molecular weight, $M_z$ of at least 500,000, or greater than 500,000, or at least 550,000, or greater than 550,000, or at least 600,000, or greater than 600,000.

In an embodiment of the disclosure, the first polyethylene has a Z-average molecular weight, $M_z$ of from about 500,000 to about 800,000, or from greater than 500,000 to about 800,000, or from greater than 500,000 to less than 800,000, or from about 500,000 to 750,000, or from about 525,000 to about 750,000, or from about 550,000 to about 750,000, or from about 575,000 to about 750,000, or from about 550,000 to about 725,000, or from about 575,000 to about 725,000, or from about 600,000 to about 700,000.

In embodiments of the disclosure, the first polyethylene has a has a molecular weight distribution, $M_w/M_n$ of from 3.0 to 20.0, or from greater than 3.0 to 18.0, or from 3.5 to 16.0.

In embodiments of the disclosure, the first polyethylene has a has a molecular weight distribution, $M_w/M_n$ of from 8.0 to 12.0, or from greater than 8.0 to 12.0, or from 8.5 to 12.0, or from 9.0 to 12.0, or from greater than 9.0 to less than 12.0, or from 9.0 to 11.5, or from 8.5 to 11.5, or from 9.0 to 11.0, or from 8.0 to 11.0, or from 9.0 to 10.5, or from 9.5 to 10.5.

In embodiments of the disclosure, the first polyethylene has a Z-average molecular weight distribution, $M_z/M_w$ of from 3.5 to 8.0, or from 4.0 to 8.0, or from 4.0 to 7.5, or from 4.0 to 7.0, or from 4.5 to 7.5, or from 4.5 to 7.0, or from 4.5 to 6.5, or from 5.0 to 7.0, or from 5.5 to 7.0, or from 5.0 to 6.5, or from 5.5 to 6.5, or from greater than 5.0 to below 6.5, or from 5.0 to 6.25, or from 5.0 to 6.0.

In an embodiment of the disclosure, the first polyethylene has a stress exponent, defined as $Log_{10}[I_6/I_2]/Log_{10}[6.48/2.16]$, which is from 1.60 to 2.00, or from 1.65 to 2.00, or from 1.70 to 2.00, or from 1.75 to 1.95, or from 1.75 to 1.90, or from 1.80 to 1.95, or from 1.80 to 1.90, or from greater than 1.80 to less than 1.90.

In an embodiment of the disclosure, the first polyethylene is characterized by having a high Mz, of about 500,000 or higher, and broad molecular weight distribution (Mw/Mn), of from about 9.0 to about 12.0.

In embodiments of the disclosure, the first polyethylene has a composition distribution breadth index, $CDBI_{50}$ of from 40 to 75 weight%, or from 50 to 70 weight%, or from 55 to 70 weight%, or from 55 to 65 weight%.

In embodiments of the disclosure, the first polyethylene has a composition distribution breadth index, $CDBI_{25}$ of from 35 to 65 weight%, or from 35 to 60 weight%, or from 35 to 55 weight%, or from 40 to 60 weight%, or from 40 to 55 weight%, or from 40 to 50 weight%, or from greater than 40 weight% to less than 50 weight%.

In an embodiment of the disclosure, the first polyethylene has a unimodal profile in a gel permeation chromatograph, GPC. The term "unimodal" is herein defined to mean there will be only one significant peak or maximum evident in the GPC-curve. A unimodal profile includes a broad unimodal profile, and a unimodal profile may also contain shoulders, or buried peaks, that cannot be easily separated, or deconvoluted into well-defined unique peaks.

In an embodiment of the disclosure, the first polyethylene will have a normal comonomer distribution profile as measured using GPC-FTIR. If the comonomer incorporation decreases with molecular weight, as measured using GPC-FTIR, the distribution is described as "normal". The term "normal comonomer distribution" then is used herein to mean, that across the molecular weight range of the first polyethylene, comonomer contents for the various polymer fractions are not substantially uniform and the higher molecular weight fractions thereof have proportionally lower comonomer contents. If the comonomer incorporation is approximately constant with molecular weight, as measured using GPC-FTIR, the comonomer distribution is described as "flat" or "uniform". The terms "reverse comonomer distribution" and "partially reverse comonomer distribution" mean that in the GPC-FTIR data obtained for the copolymer, there is one or more higher molecular weight components having a higher comonomer incorporation than in one or more lower molecular weight components. The term "reverse(d) comonomer distribution" is used herein to mean, that across the molecular weight range of the first polyethylene, comonomer contents for the various polymer fractions are not substantially uniform and the higher molecular weight fractions thereof have proportionally higher comonomer contents (i.e. if the comonomer incorporation rises with molecular weight, the distribution is described as "reverse" or "reversed"). Where the comonomer incorporation rises with increasing molecular weight and then declines, the comonomer distribution is still considered "reverse", but may also be described as "partially reverse".

In an embodiment, the first polyethylene contains catalyst residues that reflect the chemical composition of the catalyst formulation used to make it. Those skilled in the art will understand that catalyst residues are typically quantified by the parts per million of metal, in for example the first polyethylene where the metal present originates from the metal in the catalyst formulation used to make it. Non-limiting examples of the metal residue which may be present include Group 4 to 6 metals, such as titanium, zirconium, hafnium and vanadium.

In embodiments of the disclosure, the first polyethylene has at least 0.050 ppm of titanium, or at least 0.100 ppm of titanium, or at least 0.250 ppm of titanium, or at least 0.300 ppm of titanium (based on the weight of the first polyethylene).

In embodiments of the disclosure, the first polyethylene has from 0.050 to 3.0 ppm of titanium, or from 0.050 to 2.5 ppm of titanium, or from 0.050 to 2.0 ppm of titanium, or from 0.050 to 1.5 ppm of titanium, or from 0.050 to 1.0 ppm of titanium or from 0.100 to 3.0 ppm of titanium, or from 0.100 to 2.5 ppm of titanium, or from 0.100 to 2.0 ppm of titanium, or from 0.100 to 1.5 ppm of titanium, or from 0.100 to 1.0 ppm of titanium, or from 0.250 to 3.0 ppm of titanium, or from 0.250 to 2.0 ppm of titanium, or from 0.250 to 1.5 ppm of titanium, or from 0.250 to 1.0 ppm of titanium (based on the weight of the first polyethylene).

In embodiments of the disclosure, the first polyethylene has at least 0.050 ppm of vanadium, or at least 0.100 ppm of vanadium, or at least 0.200 ppm of vanadium, or at least 0.250 ppm of vanadium, or at least 0.300 ppm of vanadium (based on the weight of the first polyethylene).

In embodiments of the disclosure, the first polyethylene has from 0.050 to 3.0 ppm of vanadium, or from 0.050 to 2.5 ppm of vanadium, or from 0.050 to 2.0 ppm of vanadium, or from 0.050 to 1.5 ppm of vanadium, or from 0.050 to 1.0 ppm of vanadium, or from 0.100 to 3.0 ppm of vanadium, or from 0.100 to 2.5 ppm of vanadium, or from 0.100 to 2.0 ppm of vanadium, or from 0.100 to 1.5 ppm of vanadium, or from 0.100 to 1.0 ppm of vanadium, or from 0.200 to 3.0 ppm of vanadium, or from 0.200 to 2.0 ppm of vanadium, or from 0.200 to 1.5 ppm of vanadium, or from 0.200 to 1.0 ppm of vanadium (based on the weight of the first polyethylene).

In an embodiment of the disclosure, the first polyethylene has no long chain branches or will contain no measurable amounts of long chain branches ("LCB"). LCB is a well-known structural phenomenon in ethylene copolymers and well known to those of ordinary skill in the art. Traditionally, there are three methods for LCB analysis, namely, nuclear magnetic resonance spectroscopy (NMR), for example see J.C. Randall, J Macromol. Sci., Rev. Macromol. Chem. Phys. 1989, 29, 201; triple detection SEC equipped with a DRI, a viscometer and a low-angle laser light scattering detector, for example see W.W. Yau and D.R. Hill, Int. J. Polym. Anal. Charact. 1996; 2:151; and rheology, for example see W.W. Graessley, Acc. Chem. Res. 1977, 10, 332-339.

In an embodiment of the disclosure, an first polyethylene is made which is characterized by having a Mz of above about 500,000, a molecular weight distribution (Mw/Mn) of from about 9.0 to about 12.0 and a melt index of above 0.5 g/10min. Without wishing to be bound by theory, and as shown in the accompanying examples, we have observed that these first polyethylene properties may be achieved when using the above described multi-zone reactor system and by carefully manipulating the amount and location of hydrogen addition throughout the multi-zone reactor system.

The Second Polyethylene

In the present disclosure the second polyethylene will comprise a nucleating agent or a mixture of nucleating agents.

In embodiments of the disclosure the second polyethylene is a high density polyethylene having a density of at least 0.950 g/cm$^3$.

In the present disclosure, a high density polyethylene (HDPE) is defined as an ethylene homopolymer or an ethylene copolymer having a density of at least 0.950 g/cm$^3$.

In an embodiment of the disclosure, the high density polyethylene (HDPE) comprises one or more than one nucleating agent.

In embodiments of the disclosure the second polyethylene is a polyethylene homopolymer composition comprising one or more ethylene homopolymer components.

In embodiments of the disclosure the second polyethylene is a polyethylene homopolymer composition having a density of at least 0.950 g/cm$^3$.

In embodiments of the disclosure the second polyethylene is a polyethylene homopolymer composition comprising: a first ethylene homopolymer; and a second ethylene homopolymer and embodiments of the first ethylene homopolymer and the second ethylene homopolymer are described further below.

In an embodiment of the disclosure, the polyethylene homopolymer composition has a bimodal profile in a gel permeation chromatograph.

In an embodiment of the disclosure, the polyethylene homopolymer composition has a multimodal profile in a gel permeation chromatograph.

In an embodiment of the disclosure, the polyethylene homopolymer composition comprises one or more than one nucleating agent.

In embodiments of the disclosure, the polyethylene homopolymer composition has a density of a least 0.950 grams per cubic centimeter, g/cm$^3$, or at least 0.955 grams per cubic centimeter, g/cm$^3$, or at least 0.960 grams per cubic centimeter, g/cm$^3$.

In embodiments of the disclosure, the polyethylene homopolymer composition has a density of from 0.950 to 0.975 g/cm$^3$, or from 0.952 to 0.975 g/cm$^3$, or from 0.952 to 0.973 g/cm, or from 0.955 to 0.975 g/cm$^3$, or from 0.955 to 0.970 g/cm$^3$.

In embodiments of the disclosure, the polyethylene homopolymer composition has a melt index, $I_2$ of from 0.5 to 10.0 g/lOmin, or from 0.5 to 5.0 g/lOmin. In further embodiments of the disclosure, the polyethylene homopolymer composition has a melt index, $I_2$ of from 0.8 to 8.0 g/10min, or from 0.8 to 5 g/10min.

In an embodiment of the disclosure, the polyethylene homopolymer composition has a molecular weight distribution (Mw/Mn) of from about 3.0 to about 20.0.

The polyethylene homopolymer composition may be made by any blending process, such as: 1) physical blending of particulate resins; 2) co-feed of different resins to a common extruder; 3) melt mixing (in any conventional polymer mixing apparatus); 4) solution blending; or 5) a polymerization process which employs 2 or more reactors.

In an embodiment of the disclosure, the polyethylene homopolymer composition is prepared by a solution polymerization process using two reactors that operate under different polymerization conditions. This provides a uniform, in-situ blend of the first and second ethylene homopolymer components. An example of this process is described in published U.S. Patent Application Publication No. 2006/0047078, the disclosure of which is incorporated herein by reference.

In an embodiment of the disclosure, the polyethylene homopolymer composition is prepared by melt blending a first and second ethylene homopolymer in an extruder.

In an embodiment of the disclosure, the polyethylene homopolymer composition is prepared by melt blending the following two blend components in an extruder:

from 90 to 70 weight % of I) a first ethylene homopolymer which is a conventional polyethylene homopolymer composition (HDPE) having a melt index, $I_2$, of from about 0.8 to about 2.0 grams/10 minutes and a density of from 0.955 to 0.965 g/cm$^3$, with from 10 to 30 weight % of II) a second ethylene homopolymer which is a conventional polyethylene homopolymer composition (HDPE) having a melt index, $I_2$, of from about 15 to about 30 grams/10 minutes and a density of from 0.950 to 0.960 g/cm$^3$.

In an embodiment of the disclosure, the polyethylene homopolymer composition is prepared by a solution polymerization process using two reactors that operate under different polymerization conditions. This provides a uniform, in-situ blend of ethylene polymer components made in each reactor. Such a blend can, for example, be made according to U.S. Patent Application Publication No. US2013/0225743 or US2008/0118749, and U.S. Prov. Appl. No. 63/023,270.

In an embodiment, the polyethylene homopolymer composition is an in-situ blend of a first ethylene homopolymer and a second ethylene homopolymer.

The First Ethylene Homopolymer

In an embodiment the first ethylene homopolymer is made with a single site catalyst.

In an embodiment the first ethylene homopolymer is made with a phosphinimine catalyst.

In an embodiment the first ethylene homopolymer is made with a single site catalyst in a solution phase polymerization reactor.

In an embodiment the first ethylene homopolymer is made with a phosphinimine catalyst in a solution phase polymerization reactor.

In an embodiment of the disclosure, the first ethylene homopolymer has a melt index, $I_2$ which is lower than the melt index, $I_2$ of the second ethylene homopolymer.

In an embodiment of the disclosure, the first ethylene homopolymer has a melt index, $I_2$ which is at least 50 percent smaller than the melt index, $I_2$ of the second ethylene homopolymer.

In an embodiment of the disclosure, the first ethylene homopolymer has a melt index, $I_2$ which is at least 10 times smaller than the melt index, $I_2$ of the second ethylene homopolymer.

In an embodiment of the disclosure, the first ethylene homopolymer has a weight average molecular weight, $M_W$ that is higher than the weight average molecular weight, $M_w$ of the second ethylene homopolymer.

As will be recognized by those skilled in the art, melt index, $I_2$, is in general inversely proportional to molecular weight. Thus, in an embodiment of the disclosure, the first ethylene homopolymer has a comparatively low melt index, $I_2$ (or, alternatively stated, a comparatively high molecular weight) in comparison to the second ethylene homopolymer.

In an embodiment of the disclosure, the first ethylene homopolymer has a density of from 0.950 to 0.975 g/cm$^3$. In another embodiment of the disclosure, the first ethylene homopolymer has a density of from 0.955 to 0.970 g/cm$^3$. In another embodiment of the disclosure, the first ethylene homopolymer has a density of from 0.955 to 0.965 g/cm$^3$.

In an embodiment of the disclosure, the first ethylene homopolymer has a melt index, $I_2$ of from about 0.01 to about 1.0 grams/10 minutes (g/lOmin).

In an embodiment of the disclosure, the first ethylene homopolymer has a melt index, $I_2$ of from about 0.1 to about 2.0 grams/10 minutes (g/10min).

In embodiments of the disclosure, the first ethylene homopolymer has a melt index, $I_2$ of from about 0.1 to about 5.0 grams/10 minutes (g/10min), or from about 0.1 to about 10 grams/10minutes.

In an embodiment of the disclosure, the molecular weight distribution (Mw/Mn) of the first ethylene homopolymer is from about 1.7 to about 20.0. In further embodiments of the disclosure, the molecular weight distribution (Mw/Mn) of the first ethylene homopolymer is from about 2.0 to about 20.0, or from about 1.7 to about 4.0, or from about 2.0 to about 4.0.

In an embodiment of the disclosure, the first ethylene homopolymer may itself comprise one or more high density ethylene homopolymer subcomponents.

In an embodiment of the disclosure, the first ethylene homopolymer comprises from 95 to 30 weight percent (wt%) of the total weight of the first and second ethylene homopolymers. In an embodiment of the disclosure, the first ethylene homopolymer comprises from 95 to 40 weight percent (wt%) of the total weight of the first and second ethylene homopolymers. In an embodiment of the disclosure, the first ethylene homopolymer comprises from 95 to 50 weight percent (wt%) of the total weight of the first and second ethylene homopolymers. In an embodiment of the disclosure, the first ethylene homopolymer comprises from 95 to 60 weight percent (wt%) of the total weight of the first and second ethylene homopolymers. In an embodiment of the disclosure, the first ethylene homopolymer comprises from 90 to 30 weight percent (wt%) of the total weight of the first and second ethylene homopolymers. In an embodiment of the disclosure, the first ethylene homopolymer comprises from 90 to 40 weight percent (wt%) of the total weight of the first and second ethylene homopolymers. In an embodiment of the disclosure, the first ethylene homopolymer comprises from 90 to 50 weight percent (wt%) of the total weight of the first and second ethylene homopolymers. In an embodiment of the disclosure, the first ethylene homopolymer comprises from 90 to 60 weight percent (wt%) of the total weight of the first and second ethylene homopolymers.

In an embodiment of the disclosure, the first ethylene homopolymer comprises from 75 to 35 weight percent (wt%) of the total weight of the first and second ethylene homopolymers, or the first ethylene homopolymer comprises from 65 to 40 weight percent (wt%) of the total weight of the first and second ethylene homopolymers, or the first ethylene homopolymer comprises from 65 to 45 weight percent (wt%) of the total weight of the first and second ethylene homopolymers, or the first ethylene homopolymer comprises from 65 to 50 weight percent (wt%) of the total weight of the first and second ethylene homopolymers, or the first ethylene homopolymer comprises from 60 to 50 weight percent (wt%) of the total weight of the first and second ethylene homopolymers.

The Second Ethylene Homopolymer

In an embodiment the second ethylene homopolymer is made with a single site catalyst.

In an embodiment the second ethylene homopolymer is made with a phosphinimine catalyst.

In an embodiment the second ethylene homopolymer is made with a single site catalyst in a solution phase polymerization reactor.

In an embodiment the second ethylene homopolymer is made with a phosphinimine catalyst in a solution phase polymerization reactor.

In an embodiment of the disclosure, the second ethylene homopolymer has a melt index, $I_2$ which is higher than the melt index, $I_2$ of the first ethylene homopolymer.

In an embodiment of the disclosure, the second ethylene homopolymer has a melt index, $I_2$ which is at least 50 percent greater than the melt index, $I_2$ of the first ethylene homopolymer.

In an embodiment of the disclosure, the second ethylene homopolymer has a melt index, $I_2$ which is at least 10 times larger than the melt index, $I_2$ of the first ethylene homopolymer.

In an embodiment of the disclosure, the second ethylene homopolymer has a weight average molecular weight, $M_W$ that is lower than the weight average molecular weight, $M_w$ of the first ethylene homopolymer.

As will be recognized by those skilled in the art, melt index, $I_2$, is in general inversely proportional to molecular weight. Thus, in an embodiment of the disclosure, the second ethylene homopolymer has a comparatively high melt index, $I_2$ (or, alternatively stated, a comparatively low molecular weight) in comparison to the first ethylene homopolymer.

In an embodiment of the disclosure, the second ethylene homopolymer has a density of from 0.950 to 0.975 $g/cm^3$. In another embodiment of the disclosure, the second ethylene homopolymer has a density of from 0.955 to 0.970 $g/cm^3$. In another embodiment of the disclosure, the second ethylene homopolymer has a density of from 0.955 to 0.965 $g/cm^3$.

In an embodiment of the disclosure, the second ethylene homopolymer has a melt index, $I_2$ of greater than about 100 g/10min, or greater than about 250 g/10min, or greater than about 500 g/10min. In further embodiments, the second ethylene homopolymer may have a melt index of from greater than about 500 to about 25,000 g/10min, or from greater than about 500 to about 15,000 g/10min, or from greater than about 500 to about 10,000 g/lOmin, or from greater than about 500 to about 8,500 g/lOmin.

In further embodiments, the second ethylene homopolymer may have a melt index of from greater than about 5.0 to about 50 g/10min, or from greater than 5.0 to about 40.0 g/10min, or from greater than 5.0 to about 30 g/10min, or from greater than 5.0 to about 20.0 g/10min.

In an embodiment of the disclosure, the molecular weight distribution (Mw/Mn) of the second ethylene homopolymer is from about 1.7 to about 20.0. In further embodiments of the disclosure, the molecular weight distribution (Mw/Mn) of the second ethylene homopolymer is from about 2.0 to about 20.0, or from about 1.7 to about 4.0, or from about 2.0 to about 4.0.

In an embodiment of the disclosure, the second ethylene homopolymer may itself comprise one or more high density ethylene homopolymer subcomponents.

In an embodiment of the disclosure, the second ethylene homopolymer comprises from 5 to 70 weight percent (wt%) of the total weight of the first and second ethylene homopolymers. In an embodiment of the disclosure, the second ethylene homopolymer comprises from 5 to 60 weight percent (wt%) of the total weight of the first and second ethylene homopolymers. In an embodiment of the disclosure, the second ethylene homopolymer comprises from 5 to 50 weight percent (wt%) of the total weight of the first and second ethylene homopolymers. In an embodiment of the disclosure, the second ethylene homopolymer comprises from 5 to 40 weight percent (wt%) of the total weight of the first and second ethylene homopolymers. In an embodiment of the disclosure, the second ethylene homopolymer comprises from 10 to 70 weight percent (wt%) of the total weight of the first and second ethylene homopolymers. In an embodiment of the disclosure, the second ethylene homopolymer comprises from 10 to 60 weight percent (wt%) of the total weight of the first and second ethylene homopolymers. In an embodiment of the disclosure, the second ethylene homopolymer comprises from 10 to 50 weight percent (wt%) of the total weight of the first and second ethylene homopolymers. In an embodiment of the disclosure, the second ethylene homopolymer comprises from 10 to 40 weight percent (wt%) of the total weight of the first and second ethylene homopolymers.

In an embodiment of the disclosure, the second ethylene homopolymer comprises from 25 to 65 weight percent (wt%) of the total weight of the first and second ethylene homopolymers, or the second ethylene homopolymer comprises from 35 to 60 weight percent (wt%) of the total weight of the first and second ethylene homopolymers, or the second ethylene homopolymer comprises from 35 to 55 weight percent (wt%) of the total weight of the first and second ethylene homopolymers, or the second ethylene homopolymer comprises from 35 to 50 weight percent (wt%) of the total weight of the first and second ethylene homopolymers, or the second ethylene homopolymer comprises from 40 to 50 weight percent (wt%) of the total weight of the first and second ethylene homopolymers.

Nucleating Agents

The term "nucleating agent", as used herein, is meant to convey its conventional meaning to those skilled in the art of preparing nucleated polyolefin compositions, namely an additive that changes the crystallization behavior of a polymer as the polymer melt is cooled.

A review of nucleating agents is provided in U.S. Patent Nos. 5,981,636; 6,465,551 and 6,599,971, the disclosures of which are incorporated herein by reference.

Nucleating agents which are commercially available and which may be added to the second polyethylene (e.g. the high density polyethylene or the polyethylene homopolymer composition) are dibenzylidene sorbital esters. Further examples of nucleating agents which may be added to the second polyethylene include the cyclic organic structures disclosed in U.S. Patent No. 5,981,636 (and salts thereof, such as disodium bicyclo [2.2.1] heptene dicarboxylate); the saturated versions of the structures disclosed in U.S. Patent No. 5,981,636 (as disclosed in U.S. Patent No. 6,465,551; Zhao et al., to Milliken); the salts of certain cyclic dicarboxylic acids having a hexahydrophthalic acid structure (or "HHPA" structure) as disclosed in U.S. Patent No. 6,599,971 (Dotson et al., to Milliken); and phosphate esters, such as those disclosed in U.S. Patent No. 5,342,868 and those sold under the trade names NA-11 and NA-21 by Asahi Denka Kogyo, cyclic dicarboxylates and the salts thereof, such as the divalent metal or metalloid salts, (particularly, calcium salts) of the HHPA structures disclosed in U.S. Patent No. 6,599,971. For clarity, the HHPA structure comprises a ring structure with six carbon atoms in the ring and two carboxylic acid groups which are substituents on adjacent atoms of the ring structure. The other four carbon atoms in the ring may be substituted, as disclosed in U.S. Patent No. 6,599,971. An example is 1,2-cyclohexanedicarboxylicacid, calcium salt (CAS registry number 491589-22-1). Still further examples of nucleating agents which may be added to the second polyethylene include those disclosed in WO2015042561, WO2015042563, WO2015042562 and WO2011050042.

Another nucleating agent which is commercially available and which in an embodiment of the disclosure may be added to the second polyethylene is talc (sold as MICROTUFF® AG 609).

A nucleating agent which is commercially available and which in an embodiment of the disclosure may be added to the second polyethylene is IRGASTAB® NA 287.

A nucleating agent which is commercially available and which in an embodiment of the disclosure may be added to the second polyethylene is HPN® 210 M.

Many of the above described nucleating agents may be difficult to mix with the second polyethylene that is being nucleated and it is known to use dispersion aids, such as for example, zinc stearate, to mitigate this problem.

In an embodiment of the disclosure, the nucleating agents are well dispersed in the second polyethylene.

In an embodiment of the disclosure, the amount of nucleating agent used is comparatively small--from 100 to 3,000 parts by million per weight (based on the weight of the polymer) so it will be appreciated by those skilled in the art that some care should be taken to ensure that the nucleating agent is well dispersed. In an embodiment of the disclosure, the nucleating agent is added in finely divided form (less than 50 microns, especially less than 10 microns) to the second polyethylene to facilitate mixing. This type of "physical blend" (i.e. a mixture of the nucleating agent and the resin in solid form) is in some embodiments preferable to the use of a "masterbatch" of the nucleator (where the term "masterbatch" refers to the practice of first melt mixing the additive--the nucleator, in this case--with a small amount of the second polyethylene --then melt mixing the "masterbatch" with the remaining bulk of the second polyethylene).

In an embodiment of the disclosure, an additive such as nucleating agent may be added to the second polyethylene by way of a "masterbatch", where the term "masterbatch" refers to the practice of first melt mixing the additive (e.g. a nucleator) with a small amount of the second polyethylene, followed by melt mixing the "masterbatch" with the remaining bulk of the second polyethylene.

In an embodiment of the disclosure, the second polyethylene comprises a nucleating agent or a mixture of nucleating agents.

In an embodiment of the disclosure, the nucleating agent, or mixture of nucleating agents comprise a salt of a dicarboxylic acid.

In an embodiment, the nucleating agent, or mixture of nucleating comprises 1,2-cyclohexanedicarboxylic acid, as a calcium salt (CAS registry number 491589-22-1).

In an embodiment, the nucleating agent, or mixture of nucleating agents is 1,2-cyclohexanedicarboxylic acid, as a calcium salt (CAS registry number 491589-22-1) mixed with zinc stearate.

In embodiments, the nucleating agent, or mixture of nucleating agents is added in an amount of from 50 to 5,000 ppm, or from 100 to 4,000 ppm, or from 200 to 4,000 ppm, or from 100 to 3,000 ppm, or from 200 to 3,000 ppm, or from 100 to 2,000 ppm, or from 200 to 2,000 ppm, or from or from 500 to 5,000 ppm, or from 500 to 4,000 ppm, or from 500 to 3,000 ppm, or from 500 to 2,000 ppm or from 500 to 1,500 ppm, based on the weight of the second polyethylene.

The Third Polyethylene

In embodiments of the present disclosure, a third polyethylene has a density which is lower than the first polyethylene.

In an embodiment of the present disclosure, the third polyethylene is an ethylene copolymer.

In embodiments of the present disclosure, the third polyethylene is selected from the group consisting of: linear low density polyethylene (LLDPE), medium density polyethylene (MDPE), very low density polyethylene (VLDPE) and High Pressure Low Density Polyethylene (HPLDPE) which is prepared by the free radical polymerization of ethylene.

In embodiments of the present disclosure, the third polyethylene is selected from the group consisting of: a linear low density polyethylene (LLDPE), and a medium density polyethylene (MDPE).

In embodiments of the present disclosure, the third polyethylene is a polymer blend comprising two or more polymer blend components selected from the group consisting of: linear low density polyethylene (LLDPE), medium density polyethylene (MDPE), very low density polyethylene (VLDPE), and High Pressure Low Density Polyethylene (HPLDPE) which is prepared by the free radical polymerization of ethylene.

Very Low Density Polyethylene (VLDPE)

As used herein, the terms "very low density polyethylene" and "VLDPE" refer to an ethylene copolymer having a density of less than about 0.910 $g/cm^3$, or about 0.910 $g/cm^3$.

The very low density polyethylenes include plastomers and elastomers.

In embodiments, the VLDPE has a density of from about 0.870 $g/cm^3$ to about 0.910 $g/cm^3$, or from about 0.880 $g/cm^3$ to about 0.910 $g/cm^3$, or from about 0.890 to about 910 $g/cm^3$.

In an embodiment of the disclosure, the VLDPE is an ethylene copolymer comprising ethylene and an alpha-olefin selected from the group consisting of propylene, 1-butene, 1-hexene, 1-octene and mixtures thereof as polymerizable monomers.

In an embodiment of the disclosure, the VLDPE is an ethylene copolymer comprising ethylene and 1-octene as polymerizable monomers.

In embodiments of the disclosure, the VLDPE has a melt index, $I_2$ of from about 0.5 to about 20 g/lOmin, or from 0.5 to 10 g/lOmin.

In embodiments the VLDPE may be a homogeneously branched polyethylene.

In embodiments the VLDPE may be a heterogeneously branched polyethylene.

In an embodiment of the disclosure, the VLDPE is made with a multi-site catalyst.

In an embodiment of the disclosure, the VLDPE is made with a Ziegler-Natta catalyst.

In an embodiment of the disclosure, the VLDPE is made with a single site catalyst.

In embodiments of the disclosure, the VLDPE is made with a metallocene catalyst, a phosphinimine catalyst, or a constrained geometry catalyst.

In an embodiment of the disclosure, the VLDPE is made with a Ziegler-Natta catalyst in a solution phase polymerization process.

In an embodiment of the disclosure, the VLDPE is made with a single site catalyst in a solution phase polymerization process.

In embodiments of the disclosure, a VLPDE has a melt index ($I_2$) of from 0.1 to 10 g/lOmin, or from 0.9 to 2.3 g/lOmin, and a density of from about 0.890 to about 0.910 g/cm$^3$.

Linear Low Density Polyethylene (LLDPE)

As used herein, the terms "linear low density polyethylene" and "LLDPE" refer to a polyethylene homopolymer or, a copolymer having a density of from about 0.910 g/cm$^3$ to about 0.935 g/cm$^3$.

In an embodiment, the LLDPE is a linear polymer that contains a minimal amount or relatively small amount, or undetectable amounts of long chain branching.

In an embodiment, the LLDPE may comprise long chain branching.

As used herein, "long chain branching" means branches having a chain length greater than that of any short chain branches, which are a result of comonomer incorporation. In embodiments, the long chain branch can be about the same length or as long as the length of the polymer backbone. Long chain branching (LCB) can be determined by conventional techniques known in the industry, such as 13C nuclear magnetic resonance (13C NMR) spectroscopy, and can be quantified using, for example, the method of Randall (Rev. Macromol. Chem. Phys., C29 (2 & 3), p. 285-297). Two other methods that may be used include gel permeation chromatography coupled with a low angle laser light scattering detector (GPC-LALLS), and gel permeation chromatography coupled with a differential viscometer detector (GPC-DV). The use of these techniques for long chain branch detection, and the underlying theories, have been well documented in the literature. See, for example, Zimm, B. H. and Stockmayer, W. H., J. Chem. Phys., 17, 1301 (1949) and Rudin A., Modern Methods of Polymer Characterization, John Wiley & Sons, New York (1991), pp. 103-112.

In embodiments, the linear low density polyethylene may be substituted with an average of from 0.001 long chain branches/10,000 carbons to 3 long chain branches/10,000 carbons, from 0.001 long chain branches/10,000 carbons to 1 long chain branches/10,000 carbons, from 0.05 long chain branches/10,000 carbons to 1 long chain branches/10,000 carbons.

In other embodiments, the linear low density polyethylene is substituted with an average of less than 1 long chain branches/10,000 carbons, less than 0.5 long chain branches/10,000 carbons, or less than 0.05 long chain branches/10,000 carbons, or less than 0.01 long chain branches/10,000 carbons.

In an embodiment of the disclosure, the LLDPE is an ethylene copolymer.

In embodiments, the LLDPE is an ethylene/alpha olefin copolymer in which at least 50 weight percent of the ethylene copolymer is polymerized ethylene. In further embodiments, the LLDPE is an ethylene/alpha olefin copolymer in which at least 60 weight percent, or at least 70 wt%, or at least 80 wt%, or at least 90 wt%, or at least 95 wt% of the ethylene copolymer is polymerized ethylene.

In embodiments of the disclosure, the LLDPE is an ethylene/alpha-olefin copolymer that comprises less than 15 percent, or less than 10 percent, or less than 8 percent, or less than 7 percent, or less than 5 percent, or less than 4 percent, or less than 3 percent, by moles, of units derived from one or more alpha-olefin comonomers.

In embodiments of the disclosure, the LLDPE is an ethylene/alpha-olefin copolymer that comprises from 0.5 to 15 percent, or from 0.5 to 12 percent, or from 0.5 to 10 percent, or from 0.5 to 8 percent, or from 0.5 to 5 percent, or from 0.5 to 3 percent, or from 1 to 12 percent, or from 1 to 10 percent, or from 1 to 8 percent, or from 1 to 5 percent, or from 2 to 12 percent, or from 2 to 10 percent, or from 2 to 8 percent, or from 2 to 5 percent, or from 3 to 12 percent, or from 3 to 10 percent, or from 3 to 7 percent, by moles of units derived from one or more alpha-olefin comonomers.

In an embodiment of the disclosure, the LLDPE is an ethylene copolymer comprising ethylene and an alpha-olefin selected from the group consisting of 1-butene, 1-hexene, 1-octene and mixtures thereof as polymerizable monomers.

In an embodiment of the disclosure, the LLDPE is an ethylene copolymer comprising ethylene and 1-butene as polymerizable monomers.

In an embodiment of the disclosure, the LLDPE is an ethylene copolymer comprising ethylene and 1-hexene as polymerizable monomers.

In an embodiment of the disclosure, the LLDPE is an ethylene copolymer comprising ethylene and 1-octene as polymerizable monomers.

In an embodiment of the disclosure, the LLDPE is an ethylene copolymer comprising ethylene and 1-octene as polymerized monomers.

In an embodiment, the LLDPE has a density of from about 0.910 $g/cm^3$ to about 0.935 $g/cm^3$. In embodiments of the disclosure, the LLDPE will have a density ranging from a low of about 0.910 $g/cm^3$, or about 0.912 $g/cm^3$, or about 0.915 $g/cm^3$, or about 0.916 $g/cm^3$, or about 0.917 $g/cm^3$, or about 0.918 $g/cm^3$ to a high of about 0.927 $g/cm^3$, or about 0.930 $g/cm^3$, or about 0.932 $g/cm^3$ or about 0.935 $g/cm^3$. In embodiments of the disclosure, the LLDPE will have a density of from about 0.910 $g/cm^3$ to about 0.935 $g/cm^3$, or from about 0.910 to 0.932 $g/cm^3$, or from about 0.912 $g/cm^3$ to about 0.935 $g/cm^3$, or from about 0.912 to 0.932 $g/cm^3$, or from about 0.915 $g/cm^3$ to about 0.935 $g/cm^3$, or from about 0.915 $g/cm^3$ to about 0.932 $g/cm^3$, or from about 0.915 to about 0.930 $g/cm^3$, or from about 0.916 to about 0.935 $g/cm^3$, or from about 0.916 to about 0.932 $g/cm^3$, or from about 0.916 to about 0.930 $g/cm^3$, or from about 0.915 to about 0.927$g/cm^3$, or from 0.915 to about 0.925 $g/cm^3$, or from about 0.916 to about 0.924 $g/cm^3$, or from 0.920 to 0.935 $g/cm^3$, or from about 0.920 to 0.932 $g/cm^3$.

In an embodiment of the disclosure, the LLDPE will have a molecular weight distribution (Mw/Mn) of 10.0 or less. In further embodiments of the disclosure, the LLDPE will have a molecular weight distribution (Mw/Mn) of 9.0 or less, of 8.0 or less, of 7.0 or less, 6.0 or less.

In an embodiment of the disclosure, the LLDPE will have a molecular weight distribution (Mw/Mn) of from about 1.6 to about 6.0.

In embodiments of the disclosure, the LLDPE will have a molecular weight distribution (Mw/Mn) ranging from a low of about 1.6, or about 1.7, or about 2.0, or about 2.5, or about 3.0, or about 3.5, to a high of about 4.5, or about 5.0, or about 5.25, or about 5.5, or about 6.0. In embodiments of the disclosure, the LLDPE will have a molecular weight distribution (Mw/Mn) of from about 1.7 to about 5.5, or from about 1.7 to 5.0, or from about 1.7 to about 4.5, or from about 1.7 to about 4.0, or from about 1.8 to about 3.5, or from about 2.0 to about 3.0, or from about 2.0 to about 10,0, or from about 2.0 to about 9.0, or from 2.0 to about 8.0, or from about 2.0 to about 7.0, or from about 2.0 to about 6.0, or from about 2.0 to about 5.0, or from about 2.0 to about 4.0, or from about 2.0 to about 3.5, or from about 2.5 to about 10.0, or from about 2.5 to about 9.0, or from 2.5 to about 8.0, or from about 2.5 to about 7.0, or from about 2.5 to about 6.0, or from about 2.5 to about 5.0, or from about 2.5 to about 4.0, or from about 2.5 to about 3.5; or from about 3.0 to about 10,0, or from about 3.0 to about 9.0, or from 3.0 to about 8.0, or from about 3.0 to about 7.0, or from about 3.0 to about 6.0, or from about 3.0 to about 5.0, or from about 3.0 to about 4.0.

In some embodiments, the LLDPE may have a Z-average molecular weight distribution, Mz/Mw ratio of 1.5 to 6.0, including all values and subranges encompassed by this range. For example, in further embodiments, the LLDPE can have a Z-average molecular weight distribution, Mz/Mw lower limit of 1.5, or 1.75, or 2.0, or 2.5, or 2.75, or 3.0, or 3.5 to an upper limit of 2.0, or 2.5, or 3.0, or 3.5, or 4.0, or 4.5 or 5.0 or 5.5, or 6.0. In some embodiments, the LLDPE has a Z-average molecular weight distribution, Mz/Mw ratio of from 1.5 to 5.5, or from 1.5 to 5.0, or from 1.5 to 4.0, or from 1.5 to 3.5, or from 1.5 to 3.0, or from 1.5 to 2.5.

In embodiments of the disclosure, the LLDPE may be unimodal, or bimodal or multimodal in a gel permeation chromatography (GPC) analysis. The term "unimodal" is herein defined to mean there will be only one significant peak or maximum evident in molecular weight distribution curve generated according to the method of ASTM D6474-99. In contrast, the use of the term "bimodal" is meant to convey that in addition to a first peak, there will be a secondary peak or shoulder which represents a higher or lower molecular weight component (i.e. the molecular weight distribution, can be said to have two maxima in a molecular weight distribution curve). Alternatively, the term "bimodal" connotes the presence of two maxima in a molecular weight distribution curve generated according to the method of ASTM D6474-99. The term "multi-modal" denotes the presence of two or more, typically more than two, maxima in a molecular weight distribution curve generated according to the method of ASTM D6474-99.

In an embodiment of the disclosure, the LLDPE will have a melt index ($I_2$) of from about 0.1 g/lOmin to about 20 g/lOmin. In embodiments of the disclosure, the LLDPE will have a melt index ($I_2$) ranging from about 0.75 g/10min to about 15 g/10 min, or from about 0.85 g/lOmin to about 10 g/10 min, or from about 0.9 g/10 min to about 8 g/10 min. In embodiments of the disclosure, the LLDPE will have a melt index ($I_2$) ranging from a low of about 0.20 g/lOmin, or about 0.25 g/lOmin, or about 0.5 g/10 min, or about 0.75 g/10 min, or about 1 g/10 min, or about 2 g/10 min to a high of about 3 g/10 min, or about 4 g/10 min, or about 5 g/10 min, or about 10 g/lOmin.

In embodiments of the disclosure, a LLDPE has a melt index ($I_2$) of from 0.1 to 10 g/10min, or from 0.5 to 10.0 g/10min, or from 0.5 to 5.0 g/10min, or from 0.8 to 5.0 g/10min, or from 0.8 to 10 g/10min.

In embodiments of the disclosure the LLDPE will have a melt index ($I_2$) of from about 0.75 g/10 min to about 6 g/10 min, or from about 1 g/10 min to about 8 g/10 min, or from about 0.8 g/10 min to about 6 g/10 min, or from about 1 g/10 min to about 4.5 g/10 min, or from about 0.20 g/10 min to about 5.0 g/10 min, or from about 0.30 g/10 min to about 5.0 g/10 min, or from about 0.40 g/10 min to about 5.0 g/10 min, or from about 0.50 g/10 min to about 5.0 g/10 min, or from 0.5 to 2.5 g/lOmin, or from 0.5 to 2.0 g/lOmin.

In embodiments of the disclosure, the LLDPE may have a melt flow ratio, $I_{21}/I_2$, of from 20 to 80, including all values and subranges encompassed by this range. For example, in further embodiments, the LLDPE may have a melt index ratio, $I_{21}/I_2$, of from 20 to 75, or from 20 to 70, or from 20 to 65, or from 20 to 60, or from 20 to 55, or from 20 to 50, or from 25 to 75, or from 25 to 70, or from 25 to 65, or from 25 to 60, or from 25 to 55, or from 25 to 50, or from 30 to 80, or from 30 to 75, or from 30 to 70, or from 30 to 65, or from 30 to 60, or from 30 to 55, or from 30 to 50, or from 35 to 80, or from 35 to 75, or from 35 to 70, or from 35 to 65, or from 35 to 60, or from 35 to 55 g/10 min.

In other embodiments, the LLDPE may have a melt flow ratio, $I_{21}/I_2$, of less than 50, less than 47, less than 45, less than 42, less than 40, less than 35, less than 30. In further embodiments, the LLDPE may have a melt index ratio, $I_{21}/I_2$, of from 20 to 40, or from 20 to 37, or from 22 to 37, or from 22 to 35, or from 25 to 35, or from 25 to 30.

In embodiments of the disclosure, the LLDPE will have a melt flow ratio ($I_{21}/I_2$) of less than about 36, or less than about 35, or less than about 32, or less than about 30, or less than about 28, or less than about 26, or less than about 24, or less than about 22, or less than about 20. In embodiments of the disclosure, the LLDPE will have a melt flow ratio ($I_{21}/I_2$) of from about 16 to about 36, or from about 16 to about 35, or from about 16 to about 32, or from about 16 to about 30, or from about 18 to about 35 or from about 18 to about 32, or from about 18 to about 30, or from about 16 to about 27, or from about 16 to about 25, or from about 16 to about 22, or from about 16 to about 20.

In an embodiment of the disclosure, the LLDPE will have a $CBDI_{50}$ of $\geq$ about 50 weight percent or a $CBDI_{50}$ of $\leq$ about 50 weight percent as determined by TREF analysis.

In embodiments of the disclosure, the LLDPE will have a composition distribution breadth index $CDBI_{50}$, as determined by temperature elution fractionation (TREF), of from about 25% to about 95% by weight, or from about 35 to about 90% by weight, or from about 40% to about 85% by weight, or from about 40% to about 80% by weight.

In embodiments of the disclosure, the LLDPE can be made using a gas phase polymerization process, a solution phase polymerization process, or a slurry phase polymerization processes, or any combination thereof, using any type of reactor or reactor configuration known in the art (such as for example, fluidized bed gas phase reactors, loop reactors, stirred tank reactors, and batch reactors; and the reactors may be connected in series or in parallel and in any combination thereof).

In embodiments of the disclosure, a LLDPE has a melt index ($I_2$) of from 0.1 to 10 g/lOmin, or from 0.9 to 2.3 g/lOmin, and a density of from about 0.910 to about 0.935 g/cm$^3$.

In embodiments the LLDPE may be a homogeneously branched polyethylene.

In embodiments the LLDPE may be a heterogeneously branched polyethylene.

In an embodiment of the disclosure, the LLDPE is made with a multi-site catalyst.

In an embodiment of the disclosure, the LLDPE is made with a Ziegler-Natta catalyst.

In an embodiment of the disclosure, the LLDPE is made with a single site catalyst.

In embodiments of the disclosure, the LLDPE is made with a metallocene catalyst, a phosphinimine catalyst, or a constrained geometry catalyst.

In an embodiment of the disclosure, the LLDPE is made with a Ziegler-Natta catalyst in a solution phase polymerization process.

In an embodiment of the disclosure, the LLDPE is made with a single site catalyst in a solution phase polymerization process.

In an embodiment of the disclosure, the LLDPE is an ethylene copolymer comprising ethylene and 1-octene as polymerized monomers, has a density of from 0.910 to 0.935 g/cm$^3$, and a melt index, $I_2$ of from 0.8 to 10 g/lOmin.

Medium Density Polyethylene (MDPE)

As used herein, the terms "medium density polyethylene" and "MDPE" refer to a polyethylene homopolymer or a copolymer having a density of from about 0.936 g/cm$^3$ to about 0.949 g/cm$^3$.

In an embodiment of the disclosure, the MDPE is an ethylene copolymer.

In an embodiment of the disclosure, the MDPE is an ethylene copolymer comprising ethylene and an alpha-olefin selected from the group consisting of 1-butene, 1-hexene, 1-octene and mixtures thereof as polymerizable monomers.

In an embodiment of the disclosure, the MDPE is an ethylene copolymer comprising ethylene and 1-butene as polymerizable monomers.

In an embodiment of the disclosure, the MDPE is an ethylene copolymer comprising ethylene and 1-hexene as polymerizable monomers.

In an embodiment of the disclosure, the MDPE is an ethylene copolymer comprising ethylene and 1-octene as polymerizable monomers.

In an embodiment of the disclosure, the MDPE is an ethylene copolymer comprising ethylene and 1-octene as polymerized monomers.

I an embodiment, the MDPE has a density of from about 0.936 g/cm$^3$ to about 0.949 g/cm$^3$. In embodiments

of the disclosure, the MDPE will have a density ranging from a low of about 0.936 g/cm$^3$, or about 0.938 g/cm$^3$, or about 0.940 g/cm$^3$, to a high of about 0.949 g/cm$^3$, or about 0.947 g/cm$^3$, or about 0.945 g/cm$^3$, or about 0.942 g/cm$^3$. In embodiments of the disclosure, the MDPE will have a density of from about 0.936 g/cm$^3$ to about 0.948 g/cm$^3$, or from about 0.936 to 0.946 g/cm$^3$, or from about 0.938 g/cm$^3$ to about 0.948 g/cm$^3$, or from about 0.938 to 0.946 g/cm$^3$, or from about 0.940 g/cm$^3$ to about 0.949 g/cm$^3$, or from about 0.940 g/cm$^3$ to about 0.948 g/cm$^3$, or from about 0.940 to about 0.946 g/cm$^3$, or from about 0.936 to about 0.945 g/cm$^3$, or from about 0.938 to about 0.945 g/cm$^3$, or from 0.940 to about 0.945 g/cm$^3$.

In an embodiment of the disclosure, the MDPE will have a molecular weight distribution (Mw/Mn) of 10.0 or less. In further embodiments of the disclosure, the MDPE will have a molecular weight distribution (Mw/Mn) of 9.0 or less, of 8.0 or less, of 7.0 or less, 6.0 or less.

In an embodiment of the disclosure, the MDPE will have a molecular weight distribution (Mw/Mn) of from about 1.6 to about 8.0.

In embodiments of the disclosure, the MDPE will have a molecular weight distribution (Mw/Mn) ranging from a low of about 1.6, or about 1.7, or about 2.0, or about 2.5, or about 3.0, or about 3.5, to a high of about 4.5, or about 5.0, or about 5.25, or about 5.5, or about 6.0, or about 7.0, or about 8.0. In embodiments of the disclosure, the MDPE will have a molecular weight distribution (Mw/Mn) of from about 1.7 to about 5.5, or from about 1.7 to 5.0, or from about 1.7 to about 4.5, or from about 1.7 to about 4.0, or from about 1.8 to about 3.5, or from about 2.0 to about 3.0, or from about 2.0 to about 10,0, or from about 2.0 to about 9.0, or from 2.0 to about 8.0, or from about 2.0 to about 7.0, or from about 2.0 to about 6.0, or from about 2.0 to about 5.0, or from about 2.0 to about 4.0, or from about 2.0 to about 3.5, or from about 2.5 to about 10.0, or from about 2.5 to about 9.0, or from 2.5 to about 8.0, or from about 2.5 to about 7.0, or from about 2.5 to about 6.0, or from about 2.5 to about 5.0, or from about 2.5 to about 4.0, or from about 2.5 to about 3.5; or from about 3.0 to about 10,0, or from about 3.0 to about 9.0, or from 3.0 to about 8.0, or from about 3.0 to about 7.0, or from about 3.0 to about 6.0, or from about 3.0 to about 5.0, or from about 3.0 to about 4.0.

In some embodiments, the MDPE may have a Z-average molecular weight distribution, Mz/Mw ratio of 1.5 to 6.0, including all values and subranges encompassed by this range. For example, in further embodiments, the MDPE can have a Z-average molecular weight distribution, Mz/Mw lower limit of 1.5, or 1.75, or 2.0, or 2.5, or 2.75, or 3.0, or 3.5 to an upper limit of 2.0, or 2.5, or 3.0, or 3.5, or 4.0, or 4.5 or 5.0, or 5.5, or 6.0. In some embodiments, the MDPE has a Z-average molecular weight distribution, Mz/Mw ratio of from 1.5 to 5.5, or from 1.5 to 5.0, or from 1.5 to 4.0, or from 1.5 to 3.5, or from 1.5 to 3.0, or from 1.5 to 2.5.

In embodiments of the disclosure, the MDPE may be unimodal, or bimodal or multimodal in a gel permeation chromatography (GPC) analysis. The term "unimodal" is herein defined to mean there will be only one significant peak or maximum evident in molecular weight distribution curve generated according to the method of ASTM D6474-99. In contrast, the use of the term "bimodal" is meant to convey that in addition to a first peak, there will be a secondary peak or shoulder which represents a higher or lower molecular weight component (i.e. the molecular weight distribution, can be said to have two maxima in a molecular weight distribution curve). Alternatively, the term "bimodal" connotes the presence of two maxima in a molecular weight distribution curve generated according to the method of ASTM D6474-99. The term "multi-modal" denotes the presence of two or more, typically more than two, maxima in a molecular weight distribution curve generated according to the method of ASTM D6474-99.

In an embodiment of the disclosure, the MDPE will have a melt index (I$_2$) of from about 0.1 g/lOmin to about 20 g/lOmin. In embodiments of the disclosure, the MDPE will have a melt index (I$_2$) ranging from about 0.75 g/10min to about 15 g/10 min, or from about 0.85 g/lOmin to about 10 g/10 min, or from about 0.9 g/10 min to about 8 g/10 min. In embodiments of the disclosure, the MDPE will have a melt index (I$_2$) ranging from a low of about 0.20 g/lOmin, or about 0.25 g/lOmin, or about 0.5 g/10 min, or about 0.75 g/10 min, or about 1 g/10 min, or about 2 g/10 min to a high of about 3 g/10 min, or about 4 g/10 min, or about 5 g/10 min, or about 10 g/10min.

In embodiments of the disclosure, a MDPE has a melt index (I$_2$) of from 0.1 to 10 g/10min, or from 0.5 to 10.0 g/10min, or from 0.5 to 5.0 g/10min, or from 0.8 to 5.0 g/10min.

In embodiments of the disclosure the MDPE will have a melt index (I$_2$) of from about 0.75 g/10 min to about 6 g/10 min, or from about 1 g/10 min to about 8 g/10 min, or from about 0.8 g/10 min to about 6 g/10 min, or from about 1 g/10 min to about 4.5 g/10 min, or from about 0.20 g/10 min to about 5.0 g/10 min, or from about 0.30 g/10 min to about 5.0 g/10 min, or from about 0.40 g/10 min to about 5.0 g/10 min, or from about 0.50 g/10 min to about 5.0 g/10 min, or from 0.5 to 2.5 g/lOmin, or from 0.5 to 2.0 g/lOmin.

In embodiments of the disclosure, the MDPE may have a melt flow ratio, I$_{21}$/I$_2$, of from 20 to 80, including all values and subranges encompassed by this range. For example, in further embodiments, the MDPE may have a melt index ratio, I$_{21}$/I$_2$, of from 20 to 75, or from 20 to 70, or from 20 to 65, or from 20 to 60, or from 20 to 55, or from 20 to 50, or from 25 to 75, or from 25 to 70, or from 25 to 65, or from 25 to 60, or from 25 to 55, or from 25 to 50, or from 30 to 80, or from 30 to 75, or from 30 to 70, or from 30 to 65, or from 30 to 60, or from 30 to 55, or from 30 to 50, or from 35 to 80, or from 35 to 75, or from 35 to 70, or from 35 to 65, or from 35 to 60, or from 35 to 55 g/10 min.

In other embodiments, the MDPE may have a melt flow ratio, I$_{21}$/I$_2$, of less than 50, less than 47, less than 45, less than 42, less than 40, less than 35, less than 30. In further embodiments, the MDPE may have a melt index ratio, $I_{21}/I_2$, of 20 to 40, 20 to 37, 22 to 37, 22 to 35, 25 to 35, or 25 to 30.

In embodiments of the disclosure, the MDPE will have a melt flow ratio ($I_{21}/I_2$) of less than about 36, or less than about 35, or less than about 32, or less than about 30, or less than about 28, or less than about 26, or less than about 24, or less than about 22, or less than about 20. In embodiments of the disclosure, the MDPE will have a melt flow ratio ($I_{21}/I_2$) of from about 16 to about 36, or from about 16 to about 35, or from about 16 to about 32, or from about 16 to about 30, or from about 18 to about 35 or from about 18 to about 32, or from about 18 to about 30, or from about 16 to about 27, or from about 16 to about 25, or from about 16 to about 22, or from about 16 to about 20.

In an embodiment of the disclosure, the MDPE will have a CBDI$_{50}$ of $\geq$ about 50 weight percent or a CBDI$_{50}$ of $\leq$ about 50 weight percent as determined by TREF analysis.

In embodiments of the disclosure, the MDPE will have a composition distribution breadth index CDBI$_{50}$, as determined by temperature elution fractionation (TREF), of from about 25% to about 95% by weight, or from about 35 to about 90% by weight, or from about 40% to about 85% by weight, or from about 40% to about 80% by weight.

In embodiments of the disclosure, the MDPE can be made using a gas phase polymerization process, a solution phase polymerization process, or a slurry phase polymerization processes, or any combination thereof, using any type of reactor or reactor configuration known in the art (such as for example, fluidized bed gas phase reactors, loop reactors, stirred tank reactors, and batch reactors; and the reactors may be connected in series or in parallel and in any combination thereof).

In embodiments of the disclosure, a MDPE has a melt index ($I_2$) of from 0.1 to 10 g/lOmin, or from 0.9 to 2.3 g/lOmin, and a density of from about 0.936 to about 0.949 g/cm$^3$.

In embodiments the MDPE may be a homogeneously branched polyethylene.

In embodiments the MDPE may be a heterogeneously branched polyethylene.

In an embodiment of the disclosure, the MDPE is made with a multi-site catalyst.

In an embodiment of the disclosure, the MDPE is made with a Ziegler-Natta catalyst.

In an embodiment of the disclosure, the MDPE is made with a single site catalyst.

In embodiments of the disclosure, the MDPE is made with a metallocene catalyst, a phosphinimine catalyst, or a constrained geometry catalyst.

In an embodiment of the disclosure, the MDPE is made with a Ziegler-Natta catalyst in a solution phase polymerization process.

In an embodiment of the disclosure, the MDPE is made with a single site catalyst in a solution phase polymerization process.

In an embodiment, the MDPE is an ethylene copolymer comprising ethylene and 1-octene as polymerized monomers, has a density of from 0.936 to 0.949 g/cm$^3$, and a melt index, $I_2$ of from 0.8 to 10 g/lOmin.

Other Additives

The first, second or third polyethylene may in embodiments of the disclosure contain conventional additives, selected from the group consisting of: primary antioxidants (such as, for example, hindered phenols, including vitamin E); secondary antioxidants (such as, for example phosphites and phosphonites); UV Absorbers and Light Stabilizers; process aids (such as, for example, fluoroelastomer and/or polyethylene glycol bound process aid); slip agents; fillers, antiblocking agents and reinforcing agents; or other miscellaneous additives.

Further details of other additives which in embodiments of the disclosure are added to the first, second or third polyethylene are provided below.

In embodiments of the disclosure, the other additives may also be used in an amount of from 100 to 5,000 ppm, or from 100 to 3,000 ppm, or from 200 to 3,000 ppm, or from 200 to 2,000 ppm (based on the weight of the polymer).

Primary Antioxidants

In embodiments of the disclosure, a primary antioxidant is selected from alkylated mono-phenols such as, for example: 2,6-di-tert-butyl-4-methylphenol; 2-tert-butyl-4,6-dimethylphenol; 2,6-di-tert-butyl-4-ethylphenol; 2,6-di-tert-butyl-4-n-butylphenol; 2,6-di-tert-butyl-4isobutylphenol; 2,6-dicyclopentyl-4-methylphenol; 2-(alpha.-methylcyclohexyl)-4,6 dimethylphenol; 2,6-di-octadecyl-4-methylphenol; 2,4,6,-tricyclohexyphenol; and 2,6-di-tert-butyl-4-methoxymethylphenol.

In embodiments of the disclosure, a primary antioxidant is selected from alkylated hydroquinones. such as for example: 2,6-di-tert-butyl-4-methoxyphenol; 2,5-di-tert-butylhydroquinone; 2,5-di-tert-amyl-hydroquinone; and 2,6-diphenyl-4-octadecyloxyphenol.

In embodiments of the disclosure, a primary antioxidant is selected from hydroxylated thiodiphenyl ethers, such as, for example: 2,2'-thio-bis-(6-tert-butyl-4-methylphenol); 2,2'-thio-bis-(4-octylphenol); 4,4'thio-bis-(6-tertbutyl-3-methylphenol); and 4,4'-thio-bis-(6-tert-butyl-2-methylphenol).

In embodiments of the disclosure, a primary antioxidant is selected from alkylidene-bisphenols, such as, for example, 2,2'-methylene-bis-(6-tert-butyl-4-methylphenol); 2,2'-methylene-bis-(6-tert-butyl-4-ethylphenol); 2,2'-methylene-bis-(4-methyl-6-(alpha-methylcyclohexyl)phenol); 2,2'-methylene-bis-(4-methyl-6-cyclohexyiphenol); 2,2'-methylene-bis-(6-nonyl-4-methylphenol); 2,2'-methylene-bis-(6-nonyl-4methylphenol); 2,2'-methylene-bis-(6-(alpha-methylbenzyl)-4-nonylphenol); 2,2'-methylene-bis-(6-(alpha, alpha-dimethylbenzyl)-4-nonyl-phenol); 2,2'-methylene-bis-(4,6-di-tert-butylphenol); 2,2'-ethylidene-bis-(6-tert-butyl-4-isobutylphenol); 4,4'methylene-bis-(2,6-di-tert-butylphenol); 4,4'-methylene-bis-(6-tert-butyl-2-methylphenol); 1,1-bis-(5-tert-butyl-4-hydroxy-2-methylphenol)butane 2,6-di-(3-tert-butyl-5-methyl-2-hydroxybenzyl)-4-methylphenol; 1, 1,3-tris-(5-tert-butyl-4-hydroxy-2-methylphenyl)butane; 1, 1-bis-(5-tert-butyl-4-hydroxy2-methylphenyl)-3-dodecyl-mercaptobutane; ethyleneglycol-bis-(3,3,-bis-(3'-tert-butyl-4'-hydroxyphenyl)-butyrate)-di-(3-tert-butyl-4-hydroxy-5-methylpenyl)-dicyclopentadiene; di-(2-(3'-tert-butyl-2'hydroxy-5'methylbenzyl)-6-tert-butyl-4-methylphenyl)terephthalate; and other phenolics such as monoacrylate esters of bisphenols such as ethylidiene bis-2,4-di-t-butylphenol monoacrylate ester.

In embodiments of the disclosure, the primary antioxidant may be used in an amount of from 100 to 5,000 ppm, or from 100 to 3,000 ppm, or from 200 to 3,000 ppm, or from 200 to 2,000 ppm (based on the weight of the polymer).

Secondary Antioxidants

In embodiments of the disclosure, a secondary antioxidant is selected from phosphites and phosphonites, such as, for example, triphenyl phosphite; diphenylalkyl phosphates; phenyldialkyl phosphates; tris(nonyl-phenyl)phosphite; trilauryl phosphite; trioctadecyl phosphite; distearyl pentaerythritol diphosphite; tris(2,4-di-tert-butylphenyl)phosphite; diisodecyl pentaerythritol diphosphite; 2,4,6-tri-tert-butylphenyl-2-butyl-2-ethyl-1,3-propanediol phosphite; bis(2,4-di-tert-butylphenyl)pentaerythritol diphosphite tristearyl sorbitol triphosphite; and tetrakis(2,4-di-tert-butylphenyl)4,4'-biphenylene diphosphonite.

In embodiments of the disclosure, a secondary antioxidant is selected from hydroxylamines and amine oxides, such as, for example, N,N-dibenzylhydroxylamine; N,N-diethylhydroxylamine; N,N-dioctylhydroxylamine; N,N-dilaurylhydroxylamine; N,N-ditetradecylhydroxylamine; N,N-dihexadecylhydroxylamine; N,N-dioctadecylhydroxylamine; N-hexadecyl-N-octadecylhydroxylamine; N-heptadecyl-N-octadecylhydroxylamine; and N,N-dialkylhydroxylamine derived from hydrogenated tallow amine. The analogous amine oxides are also suitable.

In embodiments of the disclosure, the secondary antioxidant may also be used in an amount of from 100 to 5,000 ppm, or from 100 to 3,000 ppm, or from 200 to 3,000 ppm, or from 200 to 2,000 ppm (based on the weight of the polymer).

UV Absorbers and Light Stabilizers

In embodiments of the disclosure, a UV absorber or light stabilizer is selected from 2-(2'-hydroxyphenyl)-benzotriazoles, such as, for example, the 5'-methyl-,3'5'-di-tert-butyl-, 5'-tert-butyl-,5'(1,1,3,3-tetramethylbutyl) -,5-chloro-3',5'-di-tert-butyl-,5-chloro-3'-tert-butyl-5'-methyl-3'-sec-but yl-5'-tert-butyl-,4'-octoxy,3',5'-ditert-amyl-3',5'-bis-(alpha, alpha-di methylbenzyl)-derivatives.

In embodiments of the disclosure, a UV absorber or light stabilizer is selected from 2-hydroxy-benzophenones, such as, for example, the 4-hydroxy-4-methoxy-,4-octoxy,4-decyloxy-,4dodecyloxy-,4-benzyloxy,4,2',4' -trihydroxy-and 2'-hydroxy-4,4'-dimethoxy derivative.

In embodiments of the disclosure, a UV absorber or light stabilizer is selected from sterically hindered amines, such as, for example, bis (2,2,6,6-tetramethylpiperidyl)-sebacate; bis-5 (1,2,2,6,6-pentamethylpiperidyl)-sebacate; n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylendiamine and 4-tert-octylamino-2,6-dichloro-1,3,5-s-triazine; tris-(2,2,6,6-tetramethylpiperidyl)-nitrilotriacetate, tetrakis-(2,2,6,6-tetramethyl-4-piperidyl)-1,2,3,4butane-tetra-arbonic acid; and 1,1'(1,2-ethanediyl)-bis-(3,3,5,5-tetramethylpiperazinone). These amines are typically called HALS (Hindered Amines Light Stabilizing) and include butane tetracarboxylic acid 2,2,6,6-tetramethyl piperidinol esters. Such amines include hydroxylamines derived from hindered amines, such as di(1-hydroxy-2,2,6,6-tetramethylpiperidin-4-yl) sebacate; 1-hydroxy 2,2,6,6-tetramethyl-4-benzoxypiperidine; 1-hydroxy-2,2,6,6-tetramethyl-4-(3,5-di-tert-butyl-4-hydroxy hydrocinnamoyloxy)-piperdine; and N-(1-hydroxy-2,2,6,6-tetramethyl-piperidin-4-yl)-epsiloncaprolactam.

Slip Agents

In embodiments of the disclosure, a slip agent is selected from oleamide; erucamide; stearamide; and behenamide.

Fillers, Antiblocking Agents, and Reinforcing Agents

In embodiments of the disclosure, a filler, an antiblocking agent, or a reinforcing agents is selected from calcium carbonate; diatomaceous earth; natural and synthetic silica; silicates; glass fibers; asbestos; talc; kaolin; mica; barium sulfate; metal oxides and hydroxides; carbon black; and graphite.

Miscellaneous Additives

In embodiments of the disclosure, a miscellaneous additive is selected from plasticizers; epoxidized vegetable oils, such as epoxidized soybean oils; lubricants; emulsifiers; pigments; optical brighteners; flameproofing agents; anti-static agents; anti-fog agents; blowing agents; and thiosynergists, such as dilaurylthiodipropionate or distearylthiodipropionate.

The following examples are presented for the purpose of illustrating selected embodiments of this disclosure; it being understood, that the examples presented do not limit the claims presented.

EXAMPLES

Polymer Characterization and Test Methods

Prior to testing, each polymer specimen was conditioned for at least 24 hours at 23 $\pm$2°C and 50 $\pm$10% relative humidity and subsequent testing was conducted at 23 $\pm$2°C and 50 $\pm$10% relative humidity. Herein, the term "ASTM conditions" refers to a laboratory that is maintained at 23 $\pm$2°C and 50 $\pm$10% relative humidity; and specimens to be tested were conditioned for at least 24 hours in this laboratory prior to testing. ASTM refers to the American Society for Testing and Materials.

Density

Polymer densities were determined using ASTM D792-13 (November 1, 2013).

Melt Index

Polymer melt index was determined using ASTM D1238 (August 1, 2013). Melt indexes, $I_2$, $I_6$, $I_{10}$ and $I_{21}$ were measured at 190°C, using weights of 2.16 kg, 6.48 kg, 10 kg and a 21.6 kg respectively. Herein, the term "stress exponent" or its acronym "S.Ex.", is defined by the following relationship:

$$S.Ex.= \log (I_6/I_2)/\log(6480/2160)$$

wherein $I_6$ and $I_2$ are the melt flow rates measured at 190°C using 6.48 kg and 2.16 kg loads, respectively. In this disclosure, melt index was expressed using the units of g/10 minutes or g/10 min or dg/minutes or dg/min; these units are equivalent.

Neutron Acitvation (Elemental Analysis)

Neutron Activation Analysis, hereinafter N.A.A., was used to determine catalyst metal residues in polymers as follows. A radiation vial (composed of ultrapure polyethylene, 7 mL internal volume) was filled with a polymer sample and the sample weight was recorded. Using a pneumatic transfer system the sample was placed inside a SLOWPOKE™ nuclear reactor (Atomic Energy of Canada Limited, Ottawa, Ontario, Canada) and irradiated for 30 to 600 seconds for short half-life elements (e.g., Ti, V, Al, Mg, and Cl) or 3 to 5 hours for long half-life elements (e.g. Zr, Hf, Cr, Fe and Ni). The average thermal neutron flux within the reactor was $5\times10^{11}$/cm$^2$/s. After irradiation, samples were withdrawn from the reactor and aged, allowing the radioactivity to decay; short half-life elements were aged for 300 seconds or long half-life elements were aged for several days. After aging, the gamma-ray spectrum of the sample was recorded using a germanium semiconductor gamma-ray detector (Ortec model GEM55185, Advanced Measurement Technology Inc., Oak Ridge, TN, USA) and a multichannel analyzer (Ortec model DSPEC Pro). The amount of each element in the sample was calculated from the gamma-ray spectrum and recorded in parts per million relative to the total weight of the polymer sample. The N.A.A. system was calibrated with Specpure standards (1,000 ppm solutions of the desired element (greater than 99% pure)). One mL of solutions (elements of interest) were pipetted onto a 15 mm $\times$ 800 mm rectangular paper filter and air dried. The filter paper was then placed in a 1.4 mL polyethylene irradiation vial and analyzed by the N.A.A.

system. Standards are used to determine the sensitivity of the N.A.A. procedure (in counts/$\mu$g).

Gel Permeation Chromatography (GPC)

Polymer samples (polymer) solutions (1 to 3 mg/mL) were prepared by heating the polymer in 1,2,4-trichlorobenzene (TCB) and rotating on a wheel for 4 hours at 150°C in an oven. An antioxidant (2,6-di-tert-butyl-4-methylphenol (BHT)) was added to the mixture in order to stabilize the polymer against oxidative degradation. The BHT concentration was 250 ppm. Polymer solutions were chromatographed at 140°C on a PL 220 high-temperature chromatography unit equipped with four Shodex columns (HT803, HT804, HT805 and HT806) using TCB as the mobile phase with a flow rate of 1.0 mL/minute, with a differential refractive index (DRI) as the concentration detector. BHT was added to the mobile phase at a concentration of 250 ppm to protect GPC columns from oxidative degradation. The sample injection volume was 200 $\mu$L. The GPC columns were calibrated with narrow distribution polystyrene standards. The polystyrene molecular weights were converted to polyethylene molecular weights using the Mark-Houwink equation, as described in the ASTM standard test method D6474-12 (December 2012). The GPC raw data were processed with the CIRRUS® GPC software, to produce molar mass averages ($M_n$, $M_w$, $M_z$) and molar mass distribution (e.g. Polydispersity, $M_w/M_n$). In the polyethylene art, a commonly used term that is equivalent to GPC is SEC, i.e. Size Exclusion Chromatography.

GPC-FTIR

Polyethylene compositions (polymer) solutions (2 to 4 mg/mL) were prepared by heating the polymer in 1,2,4-trichlorobenzene (TCB) and rotating on a wheel for 4 hours at 150°C in an oven. The antioxidant 2,6-di-tert-butyl-4-methylphenol (BHT) was added to the mixture in order to stabilize the polymer against oxidative degradation. The BHT concentration was 250 ppm. Sample solutions were chromatographed at 140°C on a Waters GPC 150C chromatography unit equipped with four Shodex columns (HT803, HT804, HT805 and HT806) using TCB as the mobile phase with a flow rate of 1.0 mL/minute, with a FTIR spectrometer and a heated FTIR flow through cell coupled with the chromatography unit through a heated transfer line as the detection system. BHT was added to the mobile phase at a concentration of 250 ppm to protect SEC columns from oxidative degradation. The sample injection volume was 300 $\mu$L. The raw FTIR spectra were processed with OPUS FTIR software and the polymer concentration and methyl content were calculated in real time with the Chemometric Software (PLS technique) associated with the OPUS. Then the polymer concentration and methyl content were acquired and baseline-corrected with the CIRRUS GPC software. The SEC columns were calibrated with narrow distribution polystyrene standards. The polystyrene molecular weights were converted to polyethylene molecular weights using the Mark-Houwink equation, as described in the ASTM standard test method D6474. The comonomer content was calculated based on the polymer concentration and methyl content predicted by the PLS technique as described in Paul J. DesLauriers, Polymer 43, pages 159-170 (2002); herein incorporated by reference.

Short Chain Branching - GPC-FTIR

Short chain branches per 1000 carbon atoms, is measured relative to the copolymer fractions of different molecular weights. When plotted on a semi-logarithmic scale graph, the sloping line (from low molecular weight fractions to high molecular weight fractions on the logarithmic horizontal X-axis and the number of short chain branches on the vertical y-axis) is the short chain branching distribution determined by Fourier Transform Infra-Red (FTIR) spectrometry for the different molecular weight fractions. The GPC-FTIR method measures total methyl content, which includes the methyl groups located at the ends of each macromolecular chain, i.e. methyl end groups. Thus, the raw GPC-FTIR data must be corrected by subtracting the contribution from methyl end groups. To be more clear, the raw GPC-FTIR data overestimates the amount of short chain branching (SCB) and this overestimation increases as molecular weight (M) decreases. In this disclosure, raw GPC-FTIR data was corrected using the 2-methyl correction. At a given molecular weight (M), the number of methyl end groups ($N_E$) was calculated using the following equation; $N_E = 28000/M$, and $N_E$ (M dependent) was subtracted from the raw GPC-FTIR data to produce the SCB/1000C (2-Methyl Corrected) GPC-FTIR data.

Unsaturation Content

The quantity of unsaturated groups, i.e., double bonds, in a polyethylene composition was determined according to ASTM D3124-98 (vinylidene unsaturation, published March 2011) and ASTM D6248-98 (vinyl and trans unsaturation, published July 2012). An ethylene interpolymer sample was: a) first subjected to a carbon disulfide extraction to remove additives that may interfere with the analysis; b) the sample (pellet, film or granular form) was pressed into a plaque of uniform thickness (0.5 mm); and c) the plaque was analyzed by FTIR.

Comonomer Content: Fourier Transform Infrared (FTIR) Spectroscopy

The quantity of comonomer in a polyethylene composition was determined by FTIR and reported as the Short Chain Branching (SCB) content having dimensions of $CH_3\#/1000C$ (number of methyl branches per 1000 carbon atoms). This test was completed according to ASTM D6645-01 (2001), employing a compression molded polymer plaque and a Thermo-Nicolet 750 Magna-IR Spectrophotometer. The polymer plaque was prepared using a compression molding device (Wabash-Genesis Series press) according to ASTM D4703-16 (April 2016).

Differential Scanning Calorimetry (DSC)

DSC testing was conducted in general accordance with ASTM D3418. This analysis is performed by subjecting a polymer sample (5-10 mg prepared in an aluminum pan) and a reference material (empty aluminum pan) to a constant rate of temperature change within the DSC cell. The actual temperatures of the sample and reference are monitored by the instrument as the sample temperature is increased or decreased linearly with time. If the sample undergoes a transition, reaction, or transformation, the rate at which its temperature changes will differ from that of the reference. The instrument (TA Instruments Q2000 ) was first calibrated with indium; after the calibration, a polymer specimen is equilibrated at 0°C and then the temperature was increased to 200°C at a heating rate of 10°C/min; the melt was then kept isothermally at 200°C for five minutes; the melt was then cooled to 0°C at a cooling rate of 10°C/min and kept at 0°C for five minutes; the specimen was then heated to 200°C at a heating rate of 10°C/min. The difference in temperature between the sample and reference (DT = Treference - Tsample) is then plotted against the sample temperature to produce a differential thermogram. From this plot, the melting peak temperatures (°C), enthalpy of fusion (J/g) and crystallinity (%) was determined.

Dynamic Mechanical Analysis (DMA)

Oscillatory shear measurements under small strain amplitudes were carried out to obtain linear viscoelastic functions at 190°C under $N_2$ atmosphere, at a strain amplitude of 10% and over a frequency range of 0.02-126 rad/s at 5 points per decade. Frequency sweep experiments were performed with a TA Instruments DHR3 stress-controlled rheometer using cone-plate geometry with a cone angle of 5°, a truncation of 137 $\mu$m and a diameter of 25 mm. In this experiment a sinusoidal strain wave was applied and the stress response was analyzed in terms of linear viscoelastic functions. The zero shear rate viscosity ($\eta_0$) based on the DMA frequency sweep results was predicted by Ellis model (see R.B. Bird et al. "Dynamics of Polymer Liquids. Volume 1: Fluid Mechanics" Wiley-Interscience Publications (1987) p.228) or Carreau-Yasuda model (see K. Yasuda (1979) PhD Thesis, IT Cambridge). The dynamic rheological data were analysed using the rheometer software (viz., Rheometrics RHIOS V4.4 or Orchestrator Software) to determine the melt elastic modulus G'(G"=500) at a reference melt viscous modulus (G") value of G"=500 Pa. If necessary, the values were obtained by interpolation between the available data points using the Rheometrics software.

The shear thinning index, $SHI_{(0.5,50)}$ was calculated as the ratio of the complex viscosities estimated at shear stress of 0.5 kPa over that estimated at a shear stress of 50 kPa. The shear thinning index, $SHI_{(0.5,50)}$ provides information on the shear thinning behavior of the polymer melt. A high value indicates a strong dependence of viscosity with changes in deformation rate (shear or frequency).

Capillary Rheology

Rheological data obtained from the Dynisco LCR7000 capillary rheometer was used for obtaining the viscosity profiles at different shear rates for different resins. In the capillary extrusion rheometer, the material is held in a temperature-controlled barrel and forced through an accurately dimensioned die by a piston. Bore dimensions, die dimensions and the piston speed determine the apparent rate of shear being applied to the material, and the force and die dimensions are used to calculate the apparent shear stress. The shear viscosity can be obtained from capillary flow method using the Poiseuille's Law:

$$\sigma_{s} = \left(\frac{PR}{2L}\right)$$

$$\frac{\partial \gamma}{\partial t} = (4Q)(\pi R^3)$$

where P = pressure drop across the capillary (N/m$^2$); R = radius of capillary (m); L = length of the capillary (m); Q = volumetric flow rate (m³/sec); $\sigma_s$ = apparent shear stress; $\partial\gamma/(\partial t)$ = apparent shear rate.

The shear rate, shear stress and shear viscosity determined using the Poiseuille's equation are normally referred to as an apparent shear viscosity, shear stress and shear rate. This is due to fact that the non-Newtonian character of most fluids, and the pressure drop across the die entry and exit pressure are not taken into consideration. The test temperature was set up at 200°C. The length of the capillary used was 30.48 mm and the die diameter was 1.524 mm in this evaluation.

Melt Strength

The melt strength is measured on Rosand RH-7 capillary rheometer (barrel diameter = 15mm) with a flat die of 2-mm Diameter, L/D ratio 10:1 at 190°C. Pressure Transducer: 10,000 psi (68.95 MPa). Piston Speed: 5.33 mm/min. Haul-off Angle: 52°. Haul-off incremental speed: 50 - 80 m/min² or 65 ± 15 m/min². A polymer melt is extruded through a capillary die under a constant rate and then the polymer strand is drawn at an increasing haul-off speed until it ruptures. The maximum steady value of the force in the plateau region of a force versus time curve is defined as the melt strength for the polymer.

Vicat Softening Point (Temperature)

The Vicat softening point of a polymer sample was determined according to ASTM D1525-07 (published December 2009). This test determines the temperature at which a specified needle penetration occurs when samples are subjected to ASTM D1525-07 test conditions, i.e., heating Rate B (120±10°C/hr and 938 gram load (10±0.2N load).

CYTSAF/TREF (CTREF)

The "Composition Distribution Breadth Index", hereinafter CDBI, of a polymer sample was measured using a CRYSTAF/TREF 200+ unit equipped with an IR detector, hereinafter the CTREF. The acronym "TREF" refers to Temperature Rising Elution Fractionation. The CTREF was supplied by Polymer Characterization, S.A. (Valencia Technology Park, Gustave Eiffel, 8, Paterna, E-46980 Valencia, Spain). The CTREF was operated in the TREF mode, which generates the chemical composition of the polymer sample as a function of elution temperature, the Co/Ho ratio (Copolymer/Homopolymer ratio) and the CDBI (the Composition Distribution Breadth Index), i.e. $CDBI_{50}$ and $CDBI_{25}$. A polymer sample (80 to 100 mg) was placed into the reactor vessel of the CTREF. The reactor vessel was filled with 35 ml of 1,2,4-trichlorobenzene (TCB) and the polymer was dissolved by heating the solution to 150°C for 2 hours. An aliquot (1.5 mL) of the solution was then loaded into the CTREF column which was packed with stainless steel beads. The column, loaded with sample, was allowed to stabilize at 110°C for 45 minutes. The polymer was then crystallized from solution, within the column, by dropping the temperature to 30°C at a cooling rate of 0.09°C/minute. The column was then equilibrated for 30 minutes at 30°C. The crystallized polymer was then eluted from the column with TCB flowing through the column at 0.75 mL/minute, while the column was slowly heated from 30°C to 120°C at a heating rate of 0.25°C/minute. The raw CTREF data were processed using Polymer Char software, an Excel spreadsheet and CTREF software developed in-house. $CDBI_{50}$ was defined as the percent of polymer whose composition is within 50% of the median comonomer composition; $CDBI_{50}$ was calculated from the composition distribution cure and the normalized cumulative integral of the composition distribution curve, as described in United States Patent 5,376,439. Those skilled in the art will understand that a calibration curve is required to convert a CTREF elution temperature to comonomer content, i.e. the amount of comonomer in the ethylene/$\alpha$-olefin polymer fraction that elutes at a specific temperature. The generation of such calibration curves are described in the prior art, e.g. Wild, et al., J. Polym. Sci., Part B, Polym. Phys., Vol. 20 (3), pages 441-455: hereby fully incorporated by reference. $CDBI_{25}$ as calculated in a similar manner; $CDBI_{25}$ is defined as the percent of polymer whose composition is with 25% of the median comonomer composition. At the end of each sample run, the CTREF column was cleaned for 30 minutes; specifically, with the CTREF column temperature at 160°C, TCB flowed (0.5 mL/minute) through the column for 30 minutes.

Hexane Extractables

Hexane extractables was determined according to the Code of Federal Registration 21 CFR §177.1520 Para (c) 3.1 and 3.2; wherein the quantity of hexane extractable material in a sample is determined gravimetrically.

Film Optics

Film optical properties were measured as follows: Haze and clarity were measured accordingly to ASTM D1003-13 (November 15, 2013).

Film Mechanical Properties

Tensile tests in both machine and transverse directions (MD and TD, respectively) were conducted in general compliance with ASTM D882 (ASTM D882-10 and ASTM D882-12). The width of the specimen used for the tensile property measurement was 1.0 inch. The initial stretching speed is 1.0 inch/min to 5% Strain and then the speed was increased to 20.0 inches/min until break. The grip separation was 2.0 inches. Mechanical properties measured are tensile break stress (reported in MPa), strain at yield (%), yield stress (MPa), strain at break (%), break stress (MPa). The elastic modulus (MPa) were measured using 1.0 inch wide specimens, 2 inch grip separation at a test speed of 1.0 inch/min.

Film Thermal Shrinkage (%)

Shrinkage of the film was measured using $10 \times 10$ cm film specimens that were placed in an oven in air, for 5 min at 120°C. The relative decrease in length in the machine and transverse directions of the heated film compared to the original film is reported as percent shrinkage. (%) *Shrinkage = $(L_{initial} - L_{final})/L_{initial}$* where $L_{initial}$ and $L_{final}$ are the length before and after thermal treatment.

Film Thickness

Film thickness for the stretched multilayer films was measured according to ASTM D 6988-13.

The First Polyethylene

For use as a first polyethylene, an ethylene copolymer was made substantially according to disclosures made in co-pending Canadian Pat. Appl. No. 3,102,574. The ethylene copolymer (used as the first polyethylene) was prepared in a multi-zone solution polymerization process in which three polymerization zones, each defined by a different polymerization reactor, were configured in series with one another (See Figure 1). The first polymerization zone was defined by a first tubular reactor (reactor 1); the second polymerization zone was defined by an optionally stirred, tank reactor (reactor 2); and a third polymerization zone was defined by a second tubular reactor (reactor 3). Each of the reactors has an inlet, where process flows enter the reactor, and an outlet, where process flows exit the reactor. For the tubular reactors the inlet is located at the upstream terminal end of the reactor, while the outlet is located at the downstream terminal end of the reactor. In the present polymerization process, the tank reactor (reactor 2), which received process flows from the first tubular reactor, although it was an optionally stirred tank reactor in which an agitator was present, it was operated without agitation, and hence functioned as a sort of plug flow reactor. In the present disclosure then, a tank reactor which is optionally equipped with an agitator is referred to as operating in "plug flow mode" when the agitator is shut off.

The first tubular reactor (reactor 1) was a 6" diameter pipe, 36.6 meters long with a total volume of 500 liters. A Ziegler-Natta polymerization catalyst was injected at the beginning of the first tubular reactor (reactor 1), at the tubular reactor inlet (location A in Figure 1), along with solvent (cyclohexane), hydrogen, ethylene and 1-butene to initiate the polymerization reaction (note: the Ziegler-Natta polymerization catalyst components, as described further below, were brought together just upstream of the first tubular reactor inlet; not shown in Figure 1). Hydrogen was also fed to a second location in the first tubular reactor at a location which was approximately 50 percent along the length of the tubular reactor, downstream from the inlet (location B in Figure 1). In the present solution phase polymerization process, the polymerization reaction continued throughout the length of the first tubular reactor (reactor 1), within the tank reactor (reactor 2) and then throughout the length of second tubular reactor (reactor 3), as process flows moved from the first tubular reactor toward and into the tank reactor, and then into the second tubular reactor. Eight temperature indicators positioned along the first tubular reactor were used to monitor the polymerization reaction temperature profile.

Reactor 2 was a tank (or "autoclave") reactor with a volume of 3,640 liters and was protected by a relief valve set at 19.1 MPa. The tank reaction vessel was constructed of carbon steel with the inlet nozzles being Monel plated. Four baffles, 11.4 cm wide running vertically 6.35 cm from the walls and at 90° to each other, stopped any circulation action from occurring in the vessel as a result of the presence of an agitator. The agitator was equipped with five hubs, with six impeller blades each, equally spaced through the height of the reaction vessel. The tank reactor agitator was not used (although present, it was not turned on) during the present solution phase polymerization process, and hence the tank reactor was operated in "plug flow mode". Temperature indicators placed across the tank reactor were used to monitor the polymerization reaction temperature profile. The tank reaction vessel was also traced with high-pressure steam.

Reactor 3 was a second tubular reactor having a 10" diameter pipe and was 53 meters long. Temperature indicators placed across the tank reactor were used to monitor the polymerization reaction temperature profile.

Polymerization in the solution polymerization process was terminated by adding a catalyst deactivator to the exit stream exiting the outlet of the second tubular reactor (reactor 3). The catalyst deactivator used was pelargonic acid.

Solution absorbers (activated aluminum) are used to remove the Ziegler-Natta catalyst metal residues (vanadium and zirconium) to trace quantities.

A two-stage devolatilization process was employed to recover the ethylene copolymer from the process solvent, i.e. two vapor/liquid separators were used and the second bottom stream (from the second V/L separator) was passed through a gear pump/pelletizer combination.

DHT-4V (hydrotalcite), supplied by Kyowa Chemical Industry Co. Ltd., Tokyo, Japan may be used as a passivator, or acid scavenger, in the solution process. A slurry of DHT-4V in process solvent may be added prior to the first V/L separator.

Two single screw extruders pelletize the resin product and pellets are subsequently devitalized in a nitrogen and steam-fed stripper.

Prior to pelletization the ethylene copolymer was stabilized by adding 1,000 ppm of IRGANOX® 1010 (a primary antioxidant) and 1,000 ppm of IRGAFOS® 168 (a secondary antioxidant), based on weight of the ethylene copolymer composition. Antioxidants were dissolved in process solvent and added between the first and second V/L separators.

The Ziegler-Natta polymerization catalyst which was used to carry out the polymerization reaction was fed to the inlet of the first tubular reactor and was made of three components: (i) a vanadium precatalytic compound, $VOCl_3$; (ii) a titanium precatalytic component, titanium tetrachloride, $TiCl_4$; and (iii) a cocatalytic compound, triethylaluminum, $(C_2H_5)_3Al$. The $VOCl_3$ and $TiCl_4$ compounds were first combined (in cyclohexane) in a weight ratio of 80/20, and then combined with triethylaluminum just prior to injection into the first tubular reactor at the inlet of the first tubular reactor (location A in Figure 1).

Details of the solution phase polymerization carried out in a multi-zone reaction system are provided in Table 1. The details of resulting ethylene copolymers made are provided in Table 2.

TABLE 1

| Polymerization Process Conditions | | | |
|---|---|---|---|
| Ethylene Copolymer No. | EC1 | EC2 | EC3 |
| Hydrogen Injection Locations[1] | Location A and Location B | Location A and Location B | Location A and Location B |
| Cocatalyst/Catalyst ratio (Al/V+Ti)[2] | 1.4 | 1.28 | 1.19 |
| Reactor 1 Inlet Temperature (°C)[3] | 116.6 | 115.5 | 114.2 |
| Reactor 2 Mean Temperature (°C)[4] | 213 | 213.5 | 212.5 |
| Reactor 2 Delta Temperature (°C)[5] | 64.6 | 63.5 | 70.3 |
| Reactor 2 Outlet Temperature (°C)[6] | 307 | 308 | 308 |
| Reactor 3 Delta Temperature (°C)[7] | 2.35 | 3.54 | 3.12 |
| Reactor 3 Outlet Temperature (°C)[8] | 309 | 309 | 311 |
| TSR[9] | 158 | 135 | 148 |
| Total ethylene conversion from a heat/mass balance | 94.7 | 93.8 | 94.6 |
| Ethylene Concentration[10] | 16.74 | 17.2 | 17.1 |
| 1-Butene/ Ethylene Input [11] | 0.060 | 0.107 | 0.043 |
| Hydrogen fed to "Location A", at the inlet of the first tubular reactor[12] | 4.2 | 5.99 | 6.5 |
| Hydrogen fed to "Location B", downstream of the inlet of the first tubular reactor (reactor 1) at a location which was approximately 50 percent down the length of the first tubular reactor[13] | 18.7 | 44.4 | 50.6 |

(continued)

| Polymerization Process Conditions | | | |
|---|---|---|---|
| Ethylene Copolymer No. | EC1 | EC2 | EC3 |
| Hydrogen Injection Locations[1] | Location A and Location B | Location A and Location B | Location A and Location B |
| Percentage of ethylene copolymer made in the first tubular reactor (reactor 1) calculated from a heat/mass balance[14] | 33.5 | 32.4 | 35.8 |

Note 1: These are the locations of the hydrogen injection points along the length of the first tubular reactor. "A" is at the inlet to the first tubular reactor; this is also known as the reactor feed pump (RFP) location. "B" is located downstream along the first tubular reactor but still withing the length of the first tubular reactor and before the (unstirred) tank reactor. Location "B" is about 50 percent along the length of the first tubular reactor, downstream from the inlet, Location "A".

Note 2: The molar ratio of Al in cocatalyst, triethylaluminum to the metal content (V+Ti) of precatalytic mixture of $VOCl_3$ and TiCl4 mixed at a ratio of 80/20 by weight.

Note 3: The inlet temperature to the first tubular reactor (reactor 1).

Note 4: The average temperature of the (unstirred) tank reactor (reactor 2).

Note 5: The temperature difference, inlet to outlet, across the (unstirred) tank reactor (reactor 2).

Note 6: The outlet temperature of the (unstirred) tank reactor (reactor 2).

Note 7: The temperature difference between the outlet temperature of the (unstirred) tank reactor (reactor 2) which is also the inlet temperature of the second tubular reactor (reactor 3) and the outlet temperature of the second tubular reactor (reactor 3).

Note 8: The outlet temperature of the second tubular reactor (reactor 3), and just before just before deactivation of the polymerization catalyst.

Note 9: TSR is the total solution rate, defined as the sum of all the mass flows to the reactor inlet (of the first tubular reactor) in units of Tonnes per hour.

Note 10: The reactor inlet (of the first tubular reactor) ethylene concentration in units of weight percent, wt%.

Note 11: The mass ratio of 1-butene/ethylene fed to the reactor inlet (of the first tubular reactor).

Note 12: The concentration of hydrogen fed to the reactor inlet (of the first tubular reactor), in units of ppm by mass, based on the weight of the total mass flow to the multi-zone reactor system (e.g. cyclohexane + monomers (ethylene, 1-butene) + catalyst + hydrogen).

Note 13: The concentration of hydrogen fed to the first tubular reactor at the second injection point, in units of ppm by mass, based on the weight of the total mass flow to the multi-zone reactor system (e.g. cyclohexane + monomers (ethylene, 1-butene) + catalyst + hydrogen).

Note 14: The ratio given is equal to the weight ratio (wt%) of ethylene copolymer made in the first tubular reactor (reactor 1) relative to the total ethylene copolymer made within the entire multi-zone reactor system.

TABLE 2

| Ethylene Copolymer Properties | | | |
|---|---|---|---|
| Ethylene Copolymer No. | EC1 | EC2 | EC3 |
| Comonomer | 1-butene | 1-butene | 1-butene |
| Melt Index, $I_2$ (g/10min) | 0.85 | 1.38 | 1.3 |
| Density (g/cm$^3$) | 0.9485 | 0.9497 | 0.9554 |
| Stress Exponent | 1.82 | 1.88 | 1.84 |
| Melt Flow Rate, $I_{21}/I_2$ | 95 | 104 | 104 |
| Mn | 11,825 | 11,743 | 10,710 |
| Mw | 118,243 | 114,588 | 121,182 |
| Mz | 611,806 | 686,920 | 722,920 |

(continued)

| Ethylene Copolymer Properties | | | |
|---|---|---|---|
| Ethylene Copolymer No. | EC1 | EC2 | EC3 |
| Polydispersity (Mw/Mn) | 10.00 | 9.76 | 11.3 |
| Mz/Mw | 5.2 | 6 | 6 |
| Melt Strength (cN) | 4.07 | 3.01 | 3.18 |
| FTIR Branch Frequency (per 1000 carbon atoms) | 2.3 | 3.0 | 1.3 |
| Vicat (°C) | 123.7 | 121.6 | 125.5 |
| CTREF (CDBI$_{50}$) | 62.6 | 61.8 | 63.7 |
| CTREF (CDBI$_{25}$) | 47.7 | 44.4 | 50.2 |
| CTREF - Elution Maximum Peak Temperature | 95.8 | 96 | 96.4 |
| DSC Melting Point | 127.1 | 126.3 | 129.4 |
| Ti (ppm) | 0.572 | 0.370 | |
| V (ppm) | 0.444 | 0.312 | |

The Second Polyethylene

For use as the second polyethylene, a polyethylene homopolymer composition was made substantially according to disclosures made in U.S. Patent Application Publication No. US2013/0225743 or US2008/0118749 as well as the according to the teaching of U.S. Provisional Appl. No. 63/023,270.

The polyethylene homopolymer compositions used in the present examples are: a polyethylene homopolymer composition, "C1" having a density 0.968 g/cm$^3$, a melt index ($I_2$) of 2.0 g/10min, a molecular weight distribution of 8.8; and a polyethylene homopolymer composition, "C2" having a density of 0.967 g/cm$^3$, a melt index ($I_2$) of 1.2 g/10min, a molecular weight distribution ($M_w/M_n$) of 8.5, and which is commercially available from NOVA Chemicals as SURPASS® HPs167-AB.

Further details for the polyethylene homopolymer compositions are shown in Table 3.

TABLE 3

| Polyethylene Homopolymer Composition Properties | | |
|---|---|---|
| Polyethylene Homopolymer Composition No. | C1 | C2 |
| Density (g/cm$^3$) | 0.9675 | 0.967 |
| Melt Index $I_2$ (g/10 min) | 2.01 | 1.16 |
| Melt Index $I_6$ (g/10 min) | 8.43 | 5.13 |
| Melt Index $I_{10}$ (g/10 min) | 16.2 | 10.2 |
| Melt Index $I_{21}$ (g/10 min) | 82.29 | 63.7 |
| Melt Flow Ratio ($I_{21}/I_2$) | 40.94 | 55.2 |
| Stress Exponent | 1.3 | 1.36 |
| Melt Flow Ratio ($I_{10}/I_2$) | 8.18 | 9.29 |
| Comonomer | None | None |
| GPC - Conventional | | |
| $M_n$ | 9130 | 11416 |
| $M_w$ | 80726 | 97009 |

(continued)

| GPC - Conventional | | |
|---|---|---|
| $M_z$ | 230851 | 286830 |
| Polydispersity Index ($M_w/M_n$) | 8.84 | 8.5 |
| DSC | | |
| Melting Peak (°C) | 133.7 | 134.13 |
| Heat of Fusion (J/g) | 256.2 | 245.4 |
| Crystallinity (%) | 88.40 | 84.63 |
| CTREF | | |
| Elution Peak 1 (°C) | 102.2 | 102.8 |
| Elution Peak 2 (°C) | 98.1 | 98.3 |
| $CDBI_{25}$ | 32.6 | 29.6 |
| $CDBI_{50}$ | 47.1 | 47.1 |
| Rheological Properties | | |
| Zero Shear Viscosity - 190°C (Pa-s) | 5285 | 10100 |
| G'@G"500Pa (Pa) | 44.3 | 63.2 |
| Hexane Extractables (%) - Plaque | 0.48 | 0.22 |

Addition of a Nucleating Agent

A polyethylene homopolymer composition ("C1" or "C2") was nucleated with 1,200 ppm (parts per million by weight) of HYPERFORM® HPN-20E which is commercially available from Milliken. The nucleating agent is reported to be a combination of a) a calcium salt of HHPA; and b) zinc stearate, in a 2/1 weight ratio. To nucleate a polyethylene homopolymer composition, a HPN-20E masterbatch was made and the masterbatch let down at an appropriate level and melt compounded into the polyethylene homopolymer composition.

Alternatively, an ethylene copolymer ("EC2") was nucleated with 4,000 ppm (parts per million by weight) of MICROTUFF AG 609, which is commercially available from Specialty Minerals. To nucleate an ethylene copolymer, a masterbatch containing MICROTUFF AG 609 was produced and the masterbatch let down at an appropriate level and melt compounded into the ethylene copolymer.

The Third Polyethylene

A linear low density polyethylene (LLDPE1) used as the third polyethylene in the present examples was SURPASS® FPs123-A, an ethylene copolymer comprising ethylene and 1-octene, which has a density of 0.923 g/cm³ and a melt index, $I_2$ of 1.3 g/10min and which is commercially available from NOVA Chemicals.

A medium density polyethylene (MDPE1) used as the third polyethylene in the present examples was SURPASS FPs236-A, an ethylene copolymer comprising ethylene and 1-octene, which has a density of 0.936 g/cm³ and a melt index, $I_2$ of 2.9 g/10min and which is commercially available from NOVA Chemicals.

Another medium density polyethylene (MDPE2) used as the third polyethylene in the present examples was SURPASS RMs341-U, an ethylene copolymer comprising ethylene and 1-octene, which has a density of 0.941 g/cm³ and a melt index, $I_2$ of 3.5 g/cm³ and which is commercially available from NOVA Chemicals.

A. Preparation of Unstretched Film (or "Base Structure")

A multi-layer (three layer) sheet is co-extruded using a combination of twin screw and single screw extruders through a 17.2 inch slot or flat die fitted with a flexible lip (adjustable gap). The melt streams are combined near the entrance of the die. After extrusion from the die, the multi-layer web is pinned to the casting or chill roll using an air knife and edge pinners and quenched on chill rolls. The primary chill roll temperature was set at 76°C. For convenience, this unstretched multilayer sheet is sometimes referred to herein as a "base structure". The weight of polymer used in each of the three layers is indicated by an A/B/C format. For example, a base structure having two exterior layers (or skin layers) that each contain 15 weight % of the total polymer used in the film structure and a core layer containing 70 weight % of the total polymer used in the film structure is described as a 15/70/15 structure.

Several three layer, base film structures having structures ranging from 10/80/10 to 16/68/16 were prepared using various polyethylene materials as described in Table 4. For layers comprising a blend of two polyethylene materials (e.g. a core layer comprising an ethylene copolymer and a nucleated ethylene homopolymer composition), the layer was cast as a polymer blend by blending the pellets just prior to extrusion using an inline gravimetric blending system.

TABLE 4

| Base Film Structure | | | | |
|---|---|---|---|---|
| Base A/B/C Film Structure No. | Layer A, First Adjacent (Skin) Layer | Layer B (Core) | Layer C, Second Adjacent (Skin) Layer | Film Structure (A/B/C) |
| 1 (Comp.) | 100 wt.% EC1 | 100 wt. % EC1 | 100 wt.% EC1 | 10/80/10 |
| 2 (Comp.) | 100 wt.% MDPE1 | 100 wt. % EC2 | 100 wt.% MDPE1 | 16/68/16 |
| 3 | 100 wt.% MDPE1 | 75 wt. % EC2 / 25 wt. % C1* | 100 wt.% MDPE1 | 16/68/16 |
| 4 | 100 wt.% MDPE1 | 75 wt. % EC2 / 25 wt. % C1* | 100 wt.% MDPE1 | 16/68/16 |
| 5 | 100 wt.% MDPE1 | 75 wt. % EC2 / 25 wt. % C1* | 100 wt.% MDPE1 | 16/68/16 |
| 6 | 100 wt.% MDPE1 | 99 wt. % EC2 / 1 wt. % C1* | 100 wt.% MDPE1 | 16/68/16 |
| 7 | 100 wt.% MDPE1 | 95 wt. % EC3 / 5 wt. % C2* | 100 wt.% MDPE1 | 15/70/15 |
| 8 | 100 wt.% MDPE1 | 98 wt. % EC3 / 2 wt. % C2* | 100 wt.% MDPE1 | 15/70/15 |
| 9 | 100 wt.% MDPE1 | 99 wt. % EC3 / 1 wt. % C2* | 100 wt.% MDPE1 | 15/70/15 |
| 10 (Comp.) | 100 wt.% MDPE1 | 99 wt. % EC3 / 1 wt. % C1 | 100 wt.% MDPE1 | 15/70/15 |
| 11 (Comp.) | 75 wt.% LLDPE1 / 25 wt. % EC 1 | 100 wt. % EC1 | 75 wt.% LLDPE1 / 25 wt. % EC1 | 16/68/16 |
| 12 | 75 wt.% LLDPE1 / 25 wt. % EC 1 | 75 wt. % EC1 / 25 wt. % C1* | 75 wt.% LLDPE1 / 25 wt. % EC1 | 16/68/16 |
| 13 (Comp.) | 100 wt.% MDPE1 | 95 wt. % EC2 / 5 wt. % EC2** | 100 wt.% MDPE1 | 16/68/16 |
| 14 | 98 wt.% EC1 / 2 wt.% C1 | 98 wt. % EC1 / 2 wt. % C1* | 98 wt.% EC1 / 2 wt.% C1 | 15/70/15 |
| 15 | 100 wt.% MDPE2 | 99 wt. % EC3 / 1 wt. % C1* | 100 wt.% MDPE2 | 16/68/16 |
| * = nucleated material (nucleating agent = HPN-20E) <br> ** = nucleated material (nucleating agent = MICROTUFF AG 609) | | | | |

A biaxially oriented polyethylene (BOPE) film was prepared from each of these base multilayer film structures (Base Film Structure Nos 1-15) using the procedures described below in Part B.

Part B. Preparation of BOPE Films - Sequential Stretching

A sequential stretching process on a tenter frame biaxial stretching line was used to make BOPE film structures.

The stretching / orientation in the machine direction was performed first. The "oriented" sheet was then stretched in the transverse direction.

The machine direction orientation (MDO) was carried out in either a single stage or a multi-stage short gap drawing process, at temperatures up to 245°F and draw ratios up to about 6.5:1. The transverse direction orientation (TDO) was carried out over multiple zones: a preheat zone, a stretching zone, an annealing zone, and finally a single cooling zone. The TDO stretch zone temperatures were up to 280°F and the draw ratios were up to about 5.5:1.

MDO is achieved by pre-heating the base film and stretching the sheet between sets or stacks of heated rollers that are turning at different speeds. The difference in the speeds of the rollers determines the stretch ratio. Stretching can be performed in one set of draw rollers or performed over a series of draw rollers. The stretching is generally performed at temperatures below the crystalline melting temperatures of the film (Tm). The MDO film is then fed into the tenter frame oven using clips on chains attached to rails, and pre-heated. The film is stretched as the rails diverge from one another which pull the edges of the film causing the film to stretch in the transverse direction. The width of the film is set by the distance between the rails and can be adjusted to achieve the desired stretch ratio. The TDO is generally performed at a similar or at slightly higher temperatures than the MDO. Film can be annealed or relaxed when exiting the TDO unit. After the TDO, the film can be cooled and wound. A summary of the general process conditions used in the tenter frame process is provided in Table 5.

TABLE 5

| BOPE Preparation Process Conditions | |
|---|---|
| Target Melt Temperature in Extruders (F) | 450 - 480 |
| Die Width (inches) | 17.2 |
| Layer Ratio | 10/80/10 - 16/68/16 |
| Casting Roll Temperature (F) | 160 - 185 |
| Casting Roll Speed (ft/min) | 15 |
| MDO Draw Roll Temperatures (F) | 215 - 245 |
| MDO Draw Ratio | ca. 5 - 6.5:1 |
| Tenter Frame Stretch Zone temperature (F) | 230 - 260 |
| TDO Draw Ratio | ca. 5 - 5.5:1 |

All of the base film structures of Table 4 (base film structure Nos. 1-15), were successfully converted into BOPE film structures (BOPE film structure Nos. 1-15) and selected properties of these biaxially oriented multilayer film structures are given in Table 6.

TABLE 6

| BOPE Multilayer Film Properties | | | | | | | | | |
|---|---|---|---|---|---|---|---|---|---|
| BOPE A/B/C Film Structure No. | MDO Draw Ratio | TDO Draw Ratio | Haze (%) | Clarity (%) | MD E-Modulus (MPa) | TD E-Modulus (MPa) | MD Shrinkage 120/5 (%) | TD Shrinkage 120/5 (%) | Film Thickness (microns) |
| 1 (Comp.) | 6 | 5.2 | 63 | 58 | 1176 | 1419 | 10 | 11 | 20 |
| 2 (Comp.) | 5.2 | 5 | 10 | 49 | 896 | 922 | 7 | 7 | 19 |
| 3 | 5 | 5 | 10 | 95 | 811 | 1013 | 2 | 5 | 21 |
| 4 | 5.6 | 4.8 | 9 | 95 | 886 | 932 | 4 | 3 | 20 |
| 5 | 5.6 | 4.8 | 8 | 97 | 1044 | 1047 | 4 | 5 | 21 |
| 6 | 6.5 | 5.1 | 10 | 91 | 1010 | 1120 | 5 | 8 | 18 |
| 7 | 6 | 5.1 | 10 | 88 | 1170 | 1340 | 4 | 7 | 20 |
| 8 | 6 | 5.1 | 10 | 87 | 1170 | 1330 | 5 | 7 | 21 |

(continued)

| BOPE A/B/C Film Structure No. | MDO Draw Ratio | TDO Draw Ratio | Haze (%) | Clarity (%) | MD E-Modulus (MPa) | TD E-Modulus (MPa) | MD Shrinkage 120/5 (%) | TD Shrinkage 120/5 (%) | Film Thickness (microns) |
|---|---|---|---|---|---|---|---|---|---|
| 9 | 6 | 5.1 | 10 | 83 | 1180 | 1340 | 6 | 8 | 20 |
| 10 (Comp.) | 6 | 5.1 | 15 | 49 | 1190 | 1350 | 5 | 7 | 20 |
| 11 (Comp.) | 5 | 5.2 | 9 | 69 | 867 | 979 | 8 | 9 | 22 |
| 12 | 5 | 5.3 | 8 | 94 | 969 | 1124 | 6 | 6 | 20 |
| 13 (Comp.) | 5.2 | 5.1 | 21 | 77 | 950 | 1160 | 4.5 | 8.3 | 21 |
| 14 | 5.6 | 5.5 | 13 | 96 | 870 | 990 | 7 | - | 14 |
| 15 | 6.5 | 5.6 | 13 | 87 | 1140 | 1260 | 4 | 5 | 23 |

As can be seen from the data provided in Table 6, when the biaxially oriented film structure has a core layer comprising an ethylene copolymer and a nucleated polyethylene homopolymer composition, the film structure has very good haze and clarity: the haze was less than 15%, while the clarity was greater than 80%. Remarkably, the good haze and clarity was maintained even when very low amounts of the nucleated polyethylene homopolymer composition was included in the core layer (e.g. where the core layer comprised a blend of at least 95 wt% of an ethylene copolymer and no more than 5 wt% of a nucleated polyethylene homopolymer composition; see BOPE film Nos. 6, 7, 8, 9, 14 and 15). The good haze and clarity values were maintained for film structures having different materials in the first and second adjacent layers (e.g. the skins layers), so long as the core layer comprised an ethylene copolymer and a nucleated polyethylene homopolymer composition. For comparison, when the core layer comprised only an un-nucleated ethylene copolymer (Film Nos. 1, 2 and 11), or a blend of an ethylene copolymer and an un-nucleated polyethylene homopolymer composition (Film No. 10), or an ethylene copolymer blended with a nucleated ethylene copolymer (Film No. 13), one or both of the haze and clarity of the BOPE film structure were negatively impacted.

Non-limiting embodiments of the present disclosure include the following:

Embodiment A. A biaxially oriented polyethylene film structure comprising:

a core layer;
a first adjacent layer, adjacent to a first side of the core layer; and
a second adjacent layer, adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and
ii) from 0.5 to 50 weight percent of a second polyethylene, wherein the second polyethylene is a polyethylene homopolymer composition having a density of at least 0.950 g/cm3;

wherein the polyethylene homopolymer composition comprises a nucleating agent or a mixture of nucleating agents; and
wherein the first adjacent layer and the second adjacent layer each comprise at least 50 weight percent of a third polyethylene, wherein the third polyethylene has a density which is lower than the density of the first polyethylene.

Embodiment B. The biaxially oriented polyethylene film structure of Embodiment B wherein the polyethylene homopolymer composition has a density of 0.952 to 0.975 g/cm$^3$.

Embodiment C. The biaxially oriented polyethylene film structure of Embodiment A, or B wherein the polyethylene homopolymer composition has a melt index of from 0.5 to 5.0 g/10min.

Embodiment D. The biaxially oriented polyethylene film structure of Embodiment A, B, or C wherein the polyethylene homopolymer composition comprises:

i) 5 to 70 weight% of a first ethylene homopolymer having a density of from 0.950 to 0.975 g/cm$^3$; and

ii) 95 to 30 weight% of a second ethylene homopolymer having a density of from 0.950 to 0.975 g/cm$^3$, wherein the ratio of the melt index $I_2$ of the second ethylene homopolymer to the melt index $I_2$ of the first ethylene homopolymer is at least 10.

Embodiment E. The biaxially oriented polyethylene film structure of Embodiment A, B, C, or D wherein the first polyethylene has a density of from 0.941 to 0.962 g/cm$^3$.

Embodiment F. The biaxially oriented polyethylene film structure of Embodiment A, B, C, D, or E wherein the first polyethylene has a melt index of from 0.5 to 5.0 g/10min.

Embodiment G. The biaxially oriented polyethylene film structure of Embodiment A, B, C, D, E, or F wherein the first polyethylene has a molecular weight distribution of from 3.0 to 20.0.

Embodiment H. The biaxially oriented polyethylene film structure of Embodiment A, B, C, D, E, or F wherein the first polyethylene has a molecular weight distribution of from 8.5 to 20.0.

Embodiment I. The biaxially oriented polyethylene film structure of Embodiment A, B, C, D, E, F, G, or H wherein the first polyethylene has a Z-average molecular weight, Mz, of at least 500,000 g/mol.

Embodiment J. The biaxially oriented polyethylene film structure of Embodiment A, B, C, D, E, F, G, H, or I wherein the polyethylene homopolymer composition comprises from 100 to 3,000 ppm (based on the weight of the polyethylene homopolymer composition) of the nucleating agent or mixture of nucleating agents.

Embodiment K. The biaxially oriented polyethylene film structure of Embodiment A, B, C, D, E, F, G, H, I, or J wherein the nucleating agent or mixture of nucleating agents comprises a salt of a dicarboxylic acid.

Embodiment L. The biaxially oriented polyethylene film structure of Embodiment A, B, C, D, E, F, G, H, I, J, or K wherein the third polyethylene is selected from the group consisting of: a linear low density polyethylene (LLDPE), and a medium density polyethylene (MDPE).

Embodiment M. The biaxially oriented polyethylene film structure of Embodiment A, B, C, D, E, F, G, H, I, J, K, or L wherein the core layer comprises:

i) from 70 to 99.5 weight percent of the first polyethylene; and

ii) from 0.5 to 30 weight percent of the second polyethylene.

Embodiment N. The biaxially oriented polyethylene film structure of Embodiment A, B, C, D, E, F, G, H, I, J, K, or L wherein the core layer comprises:

i) from 90 to 99.5 weight percent of the first polyethylene; and

ii) from 0.5 to 10 weight percent of the second polyethylene.

Embodiment O. The biaxially oriented polyethylene film structure of Embodiment A, B, C, D, E, F, G, H, I, J, K, L, M, or N having a haze value of less than 15 percent.

Embodiment P. The biaxially oriented polyethylene film structure of Embodiment A, B, C, D, E, F, G, H, I, J, K, L, M, N, or O having a clarity value of greater than 80 percent.

Embodiment Q. The biaxially oriented polyethylene film structure of Embodiment A, B, C, D, E, F, G, H, I, J, K, L, M, N, O, or P wherein the first adjacent layer and the second adjacent layer, are skin layers.

Embodiment R. A biaxially oriented polyethylene film structure comprising:

a core layer;

a first adjacent layer, adjacent to a first side of the core layer; and

a second adjacent layer, adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and

ii) from 0.5 to 50 weight percent of a second polyethylene, wherein the second polyethylene is a high density polyethylene having a density of at least 0.950 g/cm$^3$;

wherein the high density polyethylene comprises a nucleating agent or a mixture of nucleating agents; and wherein the first adjacent layer and the second adjacent layer each comprise at least 50 weight percent of a third polyethylene, wherein the third polyethylene has a density which is lower than the density of the first polyethylene; and

wherein the biaxially oriented polyethylene film structure has a haze value of less than 15 percent.

Embodiment S. The biaxially oriented polyethylene film structure of Embodiment R wherein the third polyethylene is selected from the group consisting of: a linear low density polyethylene (LLDPE), and a medium density polyethylene (MDPE).

Embodiment T. The biaxially oriented polyethylene film structure of Embodiment R, or S wherein the core layer comprises:

i) from 70 to 99.5 weight percent of the first polyethylene; and
ii) from 0.5 to 30 weight percent of the second polyethylene.

Embodiment U. The biaxially oriented polyethylene film structure of Embodiment R, or S wherein the core layer comprises:

i) from 90 to 99.5 weight percent of the first polyethylene; and
ii) from 0.5 to 10 weight percent of the second polyethylene.

Embodiment V. The biaxially oriented polyethylene film structure of Embodiment R, S, T, or U having a clarity value of greater than 80 percent.

Embodiment W. The biaxially oriented polyethylene film structure of Embodiment R, S, T, U, or V wherein the first adjacent layer and the second adjacent layer, are skin layers.

INDUSTRIAL APPLICABILITY

Provided is a biaxially oriented polyethylene (BOPE) film structure comprising at least three layers. The BOPE film structure has good optical properties, good recyclability and may be suitable for a wide variety of packaging applications.

**Claims**

1. A biaxially oriented polyethylene film structure comprising:

a core layer;
a first adjacent layer, adjacent to a first side of the core layer; and
a second adjacent layer, adjacent to a second side of the core layer;

wherein the core layer comprises:

i) from 50 to 99.5 weight percent of a first polyethylene, wherein the first polyethylene is an ethylene copolymer having a density of greater than 0.940 g/cm$^3$; and
ii) from 0.5 to 50 weight percent of a second polyethylene, wherein the second polyethylene is a high density polyethylene having a density of at least 0.950 g/cm$^3$;
wherein the high density polyethylene comprises a nucleating agent or a mixture of nucleating agents; and
wherein the first adjacent layer and the second adjacent layer each comprise at least 50 weight percent of a third polyethylene, wherein the third polyethylene has a density which is lower than the density of the first polyethylene; and
wherein the biaxially oriented polyethylene film structure has a haze value of less than 15 percent.

2. The biaxially oriented polyethylene film structure of claim 1, wherein the third polyethylene is selected from the group consisting of: a linear low density polyethylene (LLDPE), and a medium density polyethylene (MDPE).

3. The biaxially oriented polyethylene film structure of claim 1 or 2, wherein the core layer comprises:

   i) from 70 to 99.5 weight percent of the first polyethylene; and
   ii) from 0.5 to 30 weight percent of the second polyethylene.

4. The biaxially oriented polyethylene film structure of claim 1 or 2, wherein the core layer comprises:

   i) from 90 to 99.5 weight percent of the first polyethylene; and
   ii) from 0.5 to 10 weight percent of the second polyethylene.

5. The biaxially oriented polyethylene film structure of any one of claims 1-4 having a clarity value of greater than 80 percent.

6. The biaxially oriented polyethylene film structure of any one of claims 1-5, wherein the first adjacent layer and the second adjacent layer, are skin layers.

7. The biaxially oriented polyethylene film structure of claim 1, wherein the first polyethylene has a density of from 0.941 to 0.962 $g/cm^3$.

8. The biaxially oriented polyethylene film structure of claim 1, wherein the first polyethylene has a melt index, $I_2$, of from 0.5 to 5.0 g/10min.

9. The biaxially oriented polyethylene film structure of claim 1, wherein the first polyethylene has a molecular weight distribution, $M_w/M_n$, of from 3.0 to 20.0; optionally 8.5 to 20.0.

10. The biaxially oriented polyethylene film structure of claim 1, wherein the first polyethylene has a Z-average molecular weight, $M_z$, of at least 500,000 g/mol.

11. The biaxially oriented polyethylene film structure of claim 1, wherein the nucleating agent or mixture of nucleating agents comprises a salt of a dicarboxylic acid.

12. The biaxially oriented polyethylene film structure of claim 1, wherein the nucleating agent or a mixture of nucleating agents present in the high density polyethylene is present in an amount which provides from 1 to 1000 ppm of the nucleating agent or a mixture of nucleating agents based on the total weight of polymeric material used in the core layer.

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9303093 A
- US 20060047078
- US 20130225743 A
- US 20080118749 A
- US 63023270
- US 5981636 A
- US 6465551 B
- US 6599971 B

- US 5342868 A
- WO 2015042561 A
- WO 2015042563 A
- WO 2015042562 A
- WO 2011050042 A
- US 5376439 A
- CA 3102574


**Non-patent literature cited in the description**

- **WILD et al.** *J. Polym. Sci., Part B, Polym. Phys.,* vol. 20 (3), 441-455
- **J.C. RANDALL.** *J Macromol. Sci., Rev. Macromol. Chem. Phys.,* 1989, vol. 29, 201
- **W.W. YAU ; D.R. HILL.** *Int. J. Polym. Anal. Charact.,* 1996, vol. 2, 151
- **W.W. GRAESSLEY.** *Acc. Chem. Res.,* 1977, vol. 10, 332-339
- *CHEMICAL ABSTRACTS,* 491589-22-1
- **RANDALL.** *Rev. Macromol. Chem. Phys.,* vol. C29, 285-297

- **ZIMM, B. H. ; STOCKMAYER, W. H.** *J. Chem. Phys.,* 1949, vol. 17, 1301
- **RUDIN A.** Modern Methods of Polymer Characterization. John Wiley & Sons, 1991, 103-112
- **PAUL J. DESLAURIERS.** *Polymer,* 2002, vol. 43, 159-170
- Fluid Mechanics. **R.B. BIRD et al.** Dynamics of Polymer Liquids. Wiley-Interscience Publications, 1987, vol. 1, 228
- **K. YASUDA.** *PhD Thesis, IT Cambridge,* 1979